(19) Europäisches Patentamt
European Patent Office
Office européen des brevets

(11) **EP 3 648 983 B1**

(12) **EUROPÄISCHE PATENTSCHRIFT**

(45) Veröffentlichungstag und Bekanntmachung des Hinweises auf die Patenterteilung:
**19.04.2023 Patentblatt 2023/16**

(21) Anmeldenummer: **18740729.1**

(22) Anmeldetag: **06.07.2018**

(51) Internationale Patentklassifikation (IPC):
**B42D 25/324** *(2014.01)* **B42D 25/342** *(2014.01)*
**B42D 25/373** *(2014.01)* **B42D 25/23** *(2014.01)*
**B42D 25/24** *(2014.01)* **B42D 25/29** *(2014.01)*
**B42D 25/425** *(2014.01)* **G02B 5/09** *(2006.01)*
**G02B 5/18** *(2006.01)*

(52) Gemeinsame Patentklassifikation (CPC):
**B42D 25/23; B42D 25/24; B42D 25/29;**
**B42D 25/324; B42D 25/342; B42D 25/373;**
**B42D 25/425; G02B 5/09; G02B 5/1861**

(86) Internationale Anmeldenummer:
**PCT/EP2018/000347**

(87) Internationale Veröffentlichungsnummer:
**WO 2019/007549 (10.01.2019 Gazette 2019/02)**

(54) **OPTISCH VARIABLE SICHERHEITSANORDNUNG**

OPTICALLY VARIABLE SECURITY ARRANGEMENT

SYSTÈME DE SÉCURITÉ OPTIQUEMENT VARIABLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.07.2017 DE 102017006421**

(43) Veröffentlichungstag der Anmeldung:
**13.05.2020 Patentblatt 2020/20**

(73) Patentinhaber: **Giesecke+Devrient Currency Technology GmbH**
**81677 München (DE)**

(72) Erfinder:
• **IMHOF, Martin**
**81927 München (DE)**
• **DEHMEL, Raphael**
**83115 Neubeuern (DE)**
• **FUHSE, Christian**
**83624 Otterfing (DE)**

(74) Vertreter: **Giesecke + Devrient IP**
**Prinzregentenstraße 161**
**81677 München (DE)**

(56) Entgegenhaltungen:
WO-A1-2012/055505     WO-A1-2017/011476
WO-A2-2009/000530     WO-A2-2011/066990
WO-A2-2011/066991

**Beschreibung**

Die Erfindung betrifft optisch variable Sicherheitsanordnungen zur Absicherung von Wertgegenständen, sowie einen mit einer solchen Sicherheitsanordnung ausgestatteten Datenträger.

Datenträger, wie etwa Wert- oder Ausweisdokumente, oder andere Wertgegenstände, wie etwa Markenartikel, werden zur Absicherung oft mit Sicherheitselementen versehen, die eine Überprüfung der Echtheit der Datenträger gestatten und die zugleich als Schutz vor unerlaubter Reproduktion dienen.

Eine besondere Rolle bei der Echtheitsabsicherung spielen Sicherheitselemente mit betrachtungswinkelabhängigen Effekten, da diese selbst mit modernsten Kopiergeräten nicht reproduziert werden können. Die Sicherheitselemente werden dabei mit optisch variablen Elementen ausgestattet, die dem Betrachter unter unterschiedlichen Betrachtungswinkeln einen unterschiedlichen Bildeindruck vermitteln und beispielsweise je nach Betrachtungswinkel einen anderen Farb- oder Helligkeitseindruck und/ oder ein anderes graphisches Motiv zeigen.

Sowohl im Wertpapierdruck als auch im Verpackungsdruck sind dabei einfach zu verifizierende, farbige und dynamische Humanmerkmale von besonderem Interesse. Gegenwärtig werden solche Merkmale vor allem durch Hologramme und hologrammähnliche Gestaltungen verwirklicht, die jedoch erhebliche technologische Anforderungen an den Herstellungsprozess stellen und sich daher nicht für alle Anwendungen wirtschaftlich einsetzen lassen.

Die Druckschrift WO 2009/000530 A2 befasst sich mit Sicherheitselementen mit einer Moire-Vergrößerungsanordnung zur Darstellung eines dreidimensionalen Moire-Bildes, das Bildbestandteile in zumindest zwei, in einer Richtung senkrecht zur Moire-Vergrößerungsanordnung beabstandeten Moire-Bildebenen enthält. Die Moire-Vergrößerungsanordnung umfasst hierzu ein Fokussierelementraster zur Betrachtung des Motivbilds, das eine Anordnung einer Mehrzahl von Gitterzellen mit jeweils einem Mikrofokussierelement, z. B. einem Hohl- oder Fresnelspiegel enthält, sowie ein Motivbild, das etwa im Abstand der Brennweite der Mikrofokussierelemente angeordnet ist und zwei oder mehr jeweils einer Moire-Bildebene zugeordnete Gitterzellen-Anordnungen enthält, die Mikromotiv-Bildbestandteile enthalten. Aus der Druckschrift WO 2011/066990 A2 ist ein Sicherheitselement mit einem Träger bekannt, der einen Flächenbereich aufweist, der in eine Vielzahl von Pixeln, die jeweils zumindest eine optisch wirksame Facette umfassen, aufgeteilt ist, wobei die Mehrzahl der Pixel jeweils mehrere der optisch wirksamen Facetten mit gleicher Orientierung pro Pixel aufweisen und die Facetten so orientiert sind, dass für einen Betrachter der Flächenbereich als gegenüber seiner tatsächlichen Raumform vor- und/ oder zurückspringende Fläche wahrnehmbar ist.

Ein Sicherheitselement mit einem Träger, der einen reflektiven Flächenbereich aufweist, der in eine Vielzahl von reflektiven Pixeln aufgeteilt ist, ist auch in der Druckschrift WO 2011/066991 A2 beschrieben. Jedes Pixel weist dabei zumindest eine reflektive Facette auf, die in einer Oberfläche des Trägers ausgebildet ist. Die Orientierungen der Facetten unterschiedlicher Pixel weisen ferner über den reflektiven Flächenbereich eine im Wesentlichen zufällige Variation auf.

Die Druckschrift WO 2017/011476 A1 beschreibt ein optisches Produkt, das eine Oberfläche umfasst, die konfiguriert ist, um bei Beleuchtung durch reflektiertes oder durchgelassenes Licht in einem ersten Betrachtungswinkel ein erstes von zwei 3D-Bildern zu reproduzieren, ohne das zweite 3D-Bild zu reproduzieren, und in einem zweiten Betrachtungswinkel das zweite 3D-Bild zu reproduzieren, ohne das erste 3D-Bild zu reproduzieren.

Aus der Druckschrift WO 2012/ 055505 A1 ist ferner ein Sicherheitselement mit einem Substrat bekannt, das in einem Flächenbereich ein optisch variables Flächenmuster enthält, welches bei unterschiedlicher Beleuchtungs- und/ oder Betrachtungsrichtung unterschiedliche Darstellungen zeigt, wobei das optisch variable Flächenmuster aus einer Mehrzahl von im Wesentlichen strahlenoptisch wirkenden Facetten gebildet ist, die in dem Flächenbereich aperiodisch angeordnet sind.

Davon ausgehend liegt der Erfindung die Aufgabe zugrunde, eine optisch variable Sicherheitsanordnung der eingangs genannten Art anzugeben, die die Nachteile des Standes der Technik vermeidet. Insbesondere soll eine einfach und kostengünstig herzustellende Sicherheitsanordnung bereitgestellt werden, die in einer Überprüfungsstellung beim Kippen visuell ansprechende Bewegungseffekte zeigt.

Der Begriff "Sicherheitsanordnung" bezeichnet dabei Gestaltungen mit zumindest zwei Teilelementen, die fest miteinander verbunden sein können, die aber auch separat vorliegen und erst für die Echtheitsprüfung in eine Überprüfungsstellung gebracht werden können. Sind die Teilelemente in der Überprüfungsstellung fest miteinander verbunden, wird die Sicherheitsanordnung auch oft als "Sicherheitselement" bezeichnet.

Diese Aufgabe wird durch die Merkmale des unabhängigen Anspruchs 1 gelöst. Weiterbildungen der Erfindung sind Gegenstand der abhängigen Ansprüche.

In einem ersten Aspekt betrifft die Erfindung eine in Anspruch 1 definierte optisch variable Sicherheitsanordnung zur Absicherung von Wertgegenständen, mit

- einem ersten Teilelement mit einem zweidimensionalen Reliefraster aus einer Mehrzahl von Rasterelementen, welches in zumindest einer Raumrichtung $R_1$ eine erste Rasterweite p unterhalb von 500 $\mu$m aufweist, und bei dem die Rasterelemente jeweils aus zumindest zwei, in unterschiedliche Richtungen gerichtet reflektierenden Reliefelementen gebildet sind, und

- einem zweiten Teilelement mit zumindest einem Punkt- und/oder Linienraster, das in einer Raumrichtung $R_2$ eine zweite Rasterweite q aufweist,

- wobei das erste und zweite Teilelement in einer Überprüfungsstellung vertikal so übereinander angeordnet sind, dass die genannte Raumrichtung $R_1$ des ersten Teilelements parallel zu der genannten Raumrichtung $R_2$ des zweiten Teilelements ist und der vertikale Abstand von Reliefraster und Punkt- und/ oder Linienraster weniger als die halbe Rasterweite p beträgt,

- wobei sich die zweite Rasterweite q von der ersten Rasterweite p nur geringfügig, insbesondere um weniger als ein Fünftel unterscheidet, und/ oder die erste Rasterweite p und/ oder die zweite Rasterweite q ortsabhängig moduliert sind, so dass in der genannten Überprüfungsstellung durch das Zusammenwirken des Reliefrasters und des Punkt- und/ oder Linienrasters beim Kippen der Sicherheitsanordnung ein Bewegungseffekt entsteht,

- wobei die Rasterelemente des ersten Teilelements jeweils im Wesentlichen das Reflexionsverhalten einer vorgegebenen konkaven und/ oder konvexen Wölbung erzeugen, welche an jeder Position durch einen normalisierten lokalen Normalenvektor definiert ist, und

- wobei die Rasterelemente des ersten Teilelements als gerichtet reflektierende Reliefelemente eine Mehrzahl von Mikrospiegeln enthalten, deren Neigung gegen die x-y-Ebene des ersten Teilelements durch die Angabe ihres normalisierten Normalenvektors bestimmt ist, und wobei der Normalenvektor eines Mikrospiegels an einer Position $(x_0, y_0)$ durch den lokalen Normalenvektor der vorgegebenen Wölbung an dieser Position bestimmt ist, allerdings modifiziert durch eine zufällige oder pseudozufällige Winkelmodulation des Normalenvektors in zumindest einer Raumrichtung.

Pseudozufallszahlen sind Zahlenfolgen, die zwar zufällig erscheinen, aber durch einen deterministischen Algorithmus berechnet werden und daher im strengen Sinn keine echten Zufallszahlen sind. Dennoch werden Pseudozufallszahlen verbreitet eingesetzt, da die statistischen Eigenschaften einer Pseudozufallszahlenverteilung, wie Gleichwahrscheinlichkeit der einzelnen Zahlen oder die statistische Unabhängigkeit aufeinanderfolgender Zahlen, für praktische Zwecke, wie vorliegend für die pseudozufällige Winkelmodulation des Normalenvektors, in der Regel ausreichend unregelmäßig sind und Pseudozufallszahlen mit Computern im Gegensatz zu echten Zufallszahlen einfach zu erzeugen sind.

Bevorzugt liegt dabei nur in einer Raumrichtung eine Modifikation durch eine zufällige oder pseudozufällige Winkelmodulation des Normalenvektors vor, wobei die Winkelmodulation vorzugsweise einen Maximalwert von weniger als 5°, oder von weniger als 3° aufweist. Liegt die Modifikation in einer Raumrichtung vor, die senkrecht zu der genannten Raumrichtung $R_2$ des zweiten Teilelements ist, kann der Maximalwert der zufälligen oder pseudozufälligen Winkelmodulation auch deutlich größere Werte annehmen.

Ebenfalls mit Vorteil kann eine Modifikation durch eine zufällige oder pseudozufällige Winkelmodulation des Normalenvektors in zwei zueinander senkrechten Raumrichtungen vorliegen, wobei vorzugsweise die maximale Winkelmodulation in den beiden Raumrichtungen unterschiedlich groß ist und die größere maximale Winkelmodulation bevorzugt mindestens 2-mal, besonders bevorzugt mindestens 5-mal, und insbesondere mindestens 10-mal größer ist als die kleinere maximale Winkelmodulation.

Die Rasterelemente des ersten Teilelements erzeugen mit Vorteil im Wesentlichen das Reflexionsverhalten eines Hohl- oder Wölbspiegels, insbesondere das Reflexionsverhalten eines parabolischen Hohl- oder parabolischen Wölbspiegels. Allgemein können die Rasterelemente natürlich auch komplexere Wölbungen erzeugen, die beispielsweise in Teilbereichen konkav, in anderen Teilbereichen konvex sind. Das von den Rasterelementen erzeugte Reflexionsverhalten muss weiter nicht für alle Rasterelemente gleich sein. Bei einem "intelligenten" ersten Teilelement enthält die vorgegebene Wölbung zudem eine sich über mehrere Rasterelemente erstreckende ortsabhängige Modulation, die in Kombination mit einem "dummen" oder ebenfalls "intelligenten" Punkt- und/oder Linienraster ein Muster oder eine Information, insbesondere ein blickwinkelabhängiges farbiges und dynamisches Merkmal erzeugt.

In einem anderen, nicht unter den Anspruchsgegenstand fallenden Aspekt ist eine optisch variable Sicherheitsanordnung zur Absicherung von Wertgegenständen vorgesehen, mit

- einem ersten Teilelement mit einem zweidimensionalen Reliefraster aus einer Mehrzahl von Rasterelementen, welches in zumindest einer Raumrichtung $R_1$ eine erste Rasterweite p unterhalb von 500 $\mu$m aufweist, und bei dem die Rasterelemente jeweils aus zumindest zwei, in unterschiedliche Richtungen gerichtet reflektierenden Reliefelementen gebildet sind, und

- einem zweiten Teilelement mit zumindest einem Punkt- und/ oder Linienraster, das in einer Raumrichtung $R_2$ eine zweite Rasterweite q aufweist,

- wobei das erste und zweite Teilelement in einer Überprüfungsstellung vertikal so übereinander angeordnet sind, dass die genannte Raumrichtung $R_1$ des ersten Teilelements parallel zu der genannten

Raumrichtung $R_2$ des zweiten Teilelements ist und der vertikale Abstand von Reliefraster und Punkt- und/ oder Linienraster weniger als die halbe Rasterweite p beträgt,

- wobei sich die zweite Rasterweite q von der ersten Rasterweite p nur geringfügig, insbesondere um weniger als ein Fünftel unterscheidet, und/ oder die erste Rasterweite p und/ oder die zweite Rasterweite q ortsabhängig moduliert sind, so dass in der Überprüfungsstellung durch das Zusammenwirken des Reliefrasters und des Punkt- und/ oder Linienrasters beim Kippen der Sicherheitsanordnung ein Bewegungseffekt entsteht, und

- wobei die Reliefelemente zumindest eines Teils der Rasterelemente aperiodisch in dem Flächenbereich des jeweiligen Rasterelements angeordnet sind.

Dabei sind die Reliefelemente mit Vorteil durch gegen die x-y-Ebene des ersten Teilelements geneigte Mikrospiegel gebildet und die Mikrospiegel sind in dem Flächenbereich des jeweiligen Rasterelements mit variierender Form und/ oder Größe angeordnet. Insbesondere ist vorteilhaft vorgesehen, dass die Mikrospiegel in dem Flächenbereich mit aperiodisch oder sogar unregelmäßig variierender Form und/ oder Größe angeordnet sind.

Die Mikrospiegel weisen dabei vorteilhaft in der Ebene des Flächenbereichs des jeweiligen Rasterelements eine minimale Ausdehnung von 2 $\mu$m oder mehr, insbesondere von 10 $\mu$m oder mehr auf. Der Grund für die Wahl nicht zu kleiner Mikrospiegelabmessungen liegt dabei insbesondere darin, dass ein an den Mikrospiegeln reflektierter Lichtstrahl beugungsbedingt aufgeweitet wird, so dass sehr kleine Mikrospiegel nur lichtschwache, unscharfe Bildpunkte erzeugen.

Grundsätzlich kann die Form der Mikrospiegel beliebig gewählt sein. Neben Gestaltungen mit rechteckigem Umriss und unregelmäßigem Umriss können die Mikrospiegel beispielsweise auch mit rundem Umriss, mit ovalem Umriss, mit dreieckigem Umriss oder mit vieleckigem Umriss ausgebildet sein. Die Form der Mikrospiegel kann auch so gewählt sein, dass ihre laterale Abmessung in einer Richtung wesentlich größer ist als in der dazu senkrechten lateralen Richtung. Dadurch kann sich in zwei Raumrichtungen ein unterschiedliches beugungsbedingtes Auflösungsvermögen ergeben, das in speziellen Fällen von Vorteil sein kann. So kann ein Mikrospiegel insbesondere in der Richtung sehr lang sein, in der er nicht ansteigt. Damit wird der entsprechende Reflex in der Projektion in einer Richtung kaum aufgeweitet, während die Höhe des Mikrospiegels noch vorteilhaft klein ist. Die Form der Mikrospiegel kann auch ein weiteres verstecktes Sicherheitsmerkmal darstellen, das sich einem Inspektor erst mittels eines Hilfsmittels, beispielsweise eines Lichtmikroskops oder einer starken Lupe, offenbart.

In einer vorteilhaften Ausgestaltung sind die Reliefelemente aller Rasterelemente aperiodisch in dem Flächenbereich des jeweiligen Rasterelements angeordnet.

In einem weiteren, nicht unter den Anspruchsgegenstand fallenden Aspekt ist eine optisch variable Sicherheitsanordnung zur Absicherung von Wertgegenständen vorgesehen, mit

- einem ersten Teilelement mit einem ein- oder zweidimensionalen Reliefraster aus einer Mehrzahl von Rasterelementen, welches in zumindest einer Raumrichtung $R_1$ eine erste Rasterweite p unterhalb von 500 $\mu$m aufweist, und bei dem die Rasterelemente jeweils aus zumindest zwei Reliefelementen gebildet sind, die zumindest in einem Motivbereich des Reliefrasters in unterschiedliche Richtungen gerichtet reflektierend ausgebildet sind,

- einem zweiten Teilelement mit zumindest einem Punkt- und/oder Linienraster, das in einer Raumrichtung $R_2$ eine zweite Rasterweite q aufweist,

- wobei das erste und zweite Teilelement in einer Überprüfungsstellung vertikal so übereinander angeordnet sind, dass die genannte Raumrichtung $R_1$ des ersten Teilelements parallel zu der genannten Raumrichtung $R_2$ des zweiten Teilelements ist und der vertikale Abstand von Reliefraster und Punkt- und/ oder Linienraster weniger als die halbe Rasterweite p beträgt,

- wobei das Reliefraster neben dem genannten Motivbereich einen Hintergrundbereich aufweist und in dem Motivbereich die erste Rasterweite p ortsabhängig moduliert ist, so dass in der Überprüfungsstellung in dem Motivbereich durch das Zusammenwirken des Reliefrasters und des Punkt- und/oder Linienrasters beim Kippen der Sicherheitsanordnung ein Bewegungseffekt entsteht, und

- wobei in dem Hintergrundbereich die Reliefelemente modifiziert sind, um in der Überprüfungsstellung einen visuellen Kontrast zu dem Bewegungseffekt des Motivbereichs zu erzeugen.

In einer vorteilhaften Ausgestaltung sind die Reliefelemente in dem Hintergrundbereich so modifiziert, dass sie einen dunklen Hintergrund für den Bewegungseffekt des Motivbereichs zu erzeugen.

Dies kann beispielsweise dadurch sichergestellt werden, dass die Reliefelemente im Hintergrundbereich zwar reflektierend, aber mit zufällig oder pseudozufällig variierenden Reflexionsrichtungen angeordnet sind, oder dass die Reliefelemente mit einer nichtperiodischen Rauigkeit versehen sind, oder dass die Reliefelemente mit einer streuenden Mattstruktur kombiniert sind, oder dass die Reliefelemente mit lichtabsorbierenden Strukturen, wie etwa Mottenaugenstrukturen versehen sind.

Eine Abdunklung des Hintergrundbereichs kann auch dadurch erreicht werden, dass im Hintergrundbereich kleine Mikrospiegel mit steilen Flankenwinkeln eingesetzt werden oder Mikrospiegel, die Licht in andere Raumbereiche reflektieren als die Reliefelemente des Motivbereichs.

Insbesondere können die Reliefelemente von Motivbereich und Hintergrundbereich jeweils durch Mikrospiegel gebildet sein, wobei die Mikrospiegel des Hintergrundbereichs für die Abdunklung gegenüber den Mikrospiegeln des Motivbereichs in einer oder mehreren der genannten Arten modifiziert sind.

Bei einer weiteren Möglichkeit zur Erzeugung eines visuellen Kontrasts zwischen Motivbereich und Hintergrundbereich werden die Reliefelemente des Hintergrundbereichs so ausgebildet, dass dort gegenüber dem Motivbereich eine deutlich wahrnehmbare Farbtonänderung oder Glanzänderung entsteht. Beispielsweise kann im Hintergrundbereich eine Dreiecksstruktur oder eine Rinnenstruktur vorgesehen sein, die dieselbe Rasterweite q wie das Punkt- und/ oder Linienraster des zweiten Teilelementes aufweist. Im Kontrast zu dem (farbigen) Bewegungseffekt des Motivbereichs kann der Hintergrund dann einen statischen Farbeindruck zeigen, der insbesondere bereichsweise einfarbig sein kann und beispielsweise auf einer Seite des Motivbereichs mit einer ersten Farbe und einer anderen Seite des Motivbereichs mit einer zweiten Farbe in Erscheinung treten kann. Der Hintergrundbereich kann auch einen Moiré-Verlauf verschiedener Farben zeigen. Insbesondere in letzterem Fall kann sich das konkrete Erscheinungsbild von Nutzen zu Nutzen der Sicherheitsanordnungen leicht unterscheiden.

Schließlich kann der visuelle Kontrast zwischen Motivbereich und Hintergrundbereich auch durch eine Aufhellung des Hintergrundbereichs gegenüber dem Motivbereich erzeugt werden. Hierzu kann der Hintergrundbereich beispielsweise mit einer Waschfarbe oder einer bereichsweise modifizierten Farbannahmeschicht mit einer erhöhten IR-Absorptivität versehen werden. Der so modifizierte Hintergrundbereich ist dann mit IR-Laser ablatierbar, während der Motivbereich bei der Laserbeaufschlagung selbst mit einem überdruckten Punkt- und/ oder Linienraster erhalten bleibt. Auf diese Weise können selbst gepasserte Motive erzeugt werden.

Alternativ kann bei der Folienherstellung eines als Folie ausgebildeten ersten Teilelements auch ein Demetallisationsschritt im Hintergrundbereich erfolgen, um den gewünschten visuellen Kontrast zum Motivbereich herzustellen. Mittels Laserbeaufschlagung kann der Hintergrundbereich auch entfärbt oder ein Untergrunddruck entfernt werden.

In allen genannten Aspekten sind in einer vorteilhaften Erfindungsvariante das erste Teilelement und das zweite Teilelement der Sicherheitsanordnung in der Überprüfungsstellung fest miteinander verbunden. Die beiden Teilelemente können dazu beispielsweise zusammenlaminiert sein oder die Teilelemente können bei der Herstellung nacheinander übereinander erzeugt werden. Das erste Teilelement kann insbesondere in Form eines Folienelements ausgebildet sein, das auf ein Sicherheitsdokument aufgebracht oder eingebracht wird. Das zweite Teilelement kann insbesondere durch ein Druckelement gebildet sein, das vorteilhaft nach dem Auf- oder Einbringen des ersten Teilelements über dieses gedruckt wird.

In manchen Gestaltungen ist es allerdings vorteilhaft, wenn die Teilelemente der Sicherheitsanordnung als getrennte Elemente vorliegen, die erst zur Echtheitsprüfung in die Überprüfungsstellung übereinander gebracht werden. Die Teilelemente können hierzu auf verschiedenen Datenträgern oder auch auf dem gleichen Datenträger vorliegen und beispielsweise durch Falten des Datenträgers übereinander gebracht werden.

In einer vorteilhaften Weiterbildung ist vorgesehen, dass das zweidimensionale Reliefraster in einem Teilbereich optisch gleichwirkende erste und zweite Rasterelemente enthält, deren Zusammensetzung aus Reliefelementen sich unterscheidet und/oder in denen sich die Anordnung der Reliefelemente unterscheidet, wobei die ersten und zweiten Rasterelemente in Form eines mit bloßem Auge nicht sichtbaren Motivs in Gestalt eines Musters, von Zeichen oder einer Codierung angeordnet sind.

Die ersten und zweiten Rasterelemente unterscheiden sich dabei in einer vorteilhaften Ausgestaltung in der räumlichen Anordnung der Reliefelemente innerhalb der Rasterelemente. Insbesondere kann vorgesehen sein, dass die Reliefelemente der ersten Rasterelemente periodisch und die Reliefelemente der zweiten Rasterelemente aperiodisch angeordnet sind oder umgekehrt. Auch unterschiedliche periodische oder unterschiedliche aperiodische Gestaltungen in den ersten bzw. zweiten Rasterelementen kommen in Betracht.

Die ersten und zweiten Rasterelemente unterscheiden sich gemäß einer ebenfalls vorteilhaften Ausgestaltung alternativ oder zusätzlich in der Umrissform und/oder der Größe der enthaltenen Reliefelemente.

In besonders vorteilhaften Gestaltungen enthalten die Rasterelemente des ersten Teilelements als gerichtet reflektierende Reliefelemente eine Mehrzahl von Mikrospiegeln, deren Neigung, wie oben bereits erläutert, gegen die x-y-Ebene des ersten Teilelements durch die Angabe ihres normalisierten Normalenvektors bestimmt ist, und wobei der Normalenvektor eines Mikrospiegels an einer Position $(x_0, y_0)$ durch den lokalen Normalenvektor der vorgegebenen Wölbung an dieser Position bestimmt ist, allerdings modifiziert durch eine zufällige oder pseudozufällige Winkelmodulation des Normalenvektors in zumindest einer Raumrichtung. Die ersten und zweiten Rasterelemente können sich bei diesen Gestaltungen insbesondere durch die Winkelmodulation des Normalenvektors in zumindest einer Raumrichtung unterscheiden. Dazu kann die Winkelmodulation beispielsweise unterschiedliche Schwankungsgrößen in den ersten bzw. zweiten Rasterelementen aufweisen, oder die Winkelmodulation kann in unterschiedlichen Richtungen sein, beispielsweise kann in den ersten Rasterelementen nur eine Modulation des x-Winkels, in den zweiten Rasterelementen nur eine Modulation des y-Winkels vorliegen. Eine Art von Rasterelementen kann als Kontrast auch ohne Winkelmodulation bzw. mit einer im Winkelmodulation nahe Null, beispielsweise keiner 0,1° ausgebildet sein.

Bei allen genannten Erfindungsvarianten können die folgenden vorteilhaften Gestaltungen vorliegen:

- Zumindest eines, vorzugsweise alle der Punktund/oder Linienraster können als Linienraster ausgebildet sein. Dabei kann zumindest ein Linienraster ein Drucklinienraster sein, das vorzugsweise zumindest in einem Teilbereich aus einer Vielzahl im Wesentlichen paralleler Drucklinien mit einem Abstand q gebildet ist. Das Drucklinienraster kann durch eine Abstandsschicht von dem Reliefraster getrennt sein, wobei die Abstandsschicht vorteilhaft eine Prägelackschicht enthält, in die die Reliefelemente des Reliefrasters eingeprägt sind.

- Die Reliefelemente des Reliefrasters können mit einer reflexionserhöhenden Beschichtung, insbesondere einer Metallisierung versehen sein.

- Zumindest ein Punkt- und/ oder Linienraster kann durch eine in Punkt- und/oder Linienrasterform vorliegende reflexionserhöhende Beschichtung der Reliefelemente des Reliefrasters gebildet sein. Dabei kann das Reliefraster mit einer unter der reflexionserhöhenden Beschichtung liegenden Untergrundschicht, insbesondere einer vollflächigen Farbschicht kombiniert sein.

- Der vertikale Abstand von Reliefraster und Linienraster kann weniger als ein Fünftel, vorzugsweise weniger als ein Zehntel der Rasterweite p, insbesondere weniger als 15 µm betragen.

- In manchen Gestaltungen kann das Reliefraster ein eindimensionales Raster aus einer Mehrzahl langgestreckter Rasterelemente sein, welches die genannte Rasterweite p aufweist, und bei dem die Rasterelemente jeweils aus zumindest zwei linienartigen, in unterschiedliche Richtungen gerichtet reflektierenden Reliefelementen gebildet sind. Die Rasterelemente können dabei jeweils aus einer Vielzahl linienartiger Mikrospiegel oder aus einer zylindrischen Fresnel-Spiegelstruktur gebildet sein.

- In anderen Gestaltungen kann das Reliefraster ein zweidimensionales Raster aus einer Mehrzahl von Rasterelementen sein, welches in einer ersten Raumrichtung die genannte Rasterweite p aufweist, und bei dem vorzugsweise die Rasterelemente jeweils aus zumindest zwei, bevorzugt zumindest drei, besonders bevorzugt zumindest vier, in unterschiedliche Richtungen gerichtet reflektierenden Reliefelementen gebildet sind. Die Rasterelemente können dabei jeweils auch aus einer kreisförmigen oder elliptischen Anordnung einer Vielzahl von Mikrospiegeln oder einer sphärischen oder elliptischen Fresnel-Spiegelstruktur gebildet sein, und sie können mit einem motivförmigen Umriss und beabstandet voneinander angeordnet sein.

- Die Rasterelemente können jeweils aus einer Vielzahl von in unterschiedliche Richtungen gerichtet reflektierenden Reliefelementen gebildet sein, können insbesondere bei einem eindimensionalen Raster aus zumindest 10 linienartigen, in unterschiedliche Richtungen gerichtet reflektierenden Reliefelementen gebildet sein, und bei einem zweidimensionalen Raster aus zumindest 10 × 10 in unterschiedliche Richtungen gerichtet reflektierenden Reliefelementen gebildet sein.

- Die reflektierenden Reliefelemente jedes Rasterelements können so angeordnet und ausgebildet sein, dass das Rasterelement das Reflexionsverhalten einer konkaven oder konvexen Wölbung erzeugt.

- Die Rasterelemente können alle gleichartig ausgebildet sein, oder das Reliefraster kann zwei oder mehr unterschiedliche Rasterelemente enthalten, die bevorzugt beim Kippen der Sicherheitsanordnung jeweils unterschiedliche Bewegungseffekte erzeugen.

- Das Punkt- und/ oder Linienraster kann eine Vielzahl paralleler Linien umfassen, die im Wesentlichen senkrecht zur ersten Raumrichtung verlaufen. Es können auch zwei oder mehr vertikal über oder unter dem Reliefraster angeordnete Punkt- und/ oder Linienraster vorgesehen sein, insbesondere kann zumindest ein Punkt- und/ oder Linienraster über und zumindest ein Punkt- und/oder Linienraster unter dem Reliefraster angeordnet sein.

- Die erste Rasterweite p kann fest und die zweite Rasterweite q ortsabhängig moduliert sein, oder die zweite Rasterweite q kann fest und die erste Rasterweite p ortsabhängig moduliert sein. Die erste und/ oder zweite Rasterweite kann insbesondere dadurch ortsabhängig moduliert sein, dass die Positionen der Rasterelemente des Reliefrasters bzw. des Punkt- und/ oder Linienrasters durch eine Phasenfunktion $\phi(x,y)$ gegeben sind, die von der Position (x,y) des Rasterelements in dem Sicherheitselement abhängt und deren Funktionswert die Abweichung der Position des Rasterelements von der Position eines Rasterpunkts in einem regelmäßigen Raster, normiert auf das Einheitsintervall [0,1], angibt, und wobei die Phasenfunktion $\phi(x,y)$ ortsabhängig so variiert, dass beim Kippen des Sicherheitselements ein Bewegungseffekt, insbesondere ein Pump- oder Rotationseffekt entsteht.

Die Erfindung enthält auch einen Datenträger gemäß Anspruch 12 mit einer Sicherheitsanordnung der beschriebenen Art, wobei in einer bevorzugten Gestaltung zumindest ein Linienraster der Sicherheitsanordnung in Teilbereichen das Reliefraster überdeckt und sich in Teilbereichen außerhalb des Reliefrasters auf den mit der Sicherheitsanordnung versehenen Datenträger erstreckt. Die Sicherheitsanordnung ist dadurch auf dem Datenträger abgesichert und in dessen Design integriert. Eine eventuelle Manipulation oder sogar Entfernung und Übertragung der Sicherheitsanordnung auf einen anderen Datenträger ist wegen der erforderlichen Passerung der genannten Teilbereiche nicht ohne weiteres möglich. Der sich außerhalb des Reliefrasters auf den Datenträger erstreckende Teilbereich des Linienrasters wirkt dabei mit Vorteil wie eine Halbtonfläche.

Bei dem Datenträger kann es sich insbesondere um ein Wertdokument, wie eine Banknote, insbesondere eine Papierbanknote, eine Polymerbanknote oder eine Folienverbundbanknote, um eine Aktie, eine Anleihe, eine Urkunde, einen Gutschein, einen Scheck, eine hochwertige Eintrittskarte, aber auch um eine Ausweiskarte, wie etwa eine Kreditkarte, eine Bankkarte, eine Barzahlungskarte, eine Berechtigungskarte, einen Personalausweis oder eine Passpersonalisierungsseite handeln. Der Datenträger kann auch ein dekorativer Artikel, wie etwa eine Verpackung, ein Fanartikel oder ein Kleideretikett sein, oder auch ein Beipackzettel für Arzneimittel. Ist der Datenträger ein Folienelement, kann dieses auch eine Verpackungsfolie darstellen, die eine weitere Verpackung umhüllt.

Das Teilelement der Sicherheitsanordnung, dessen Rasterweite ortsabhängig moduliert ist, wird in dieser Beschreibung auch als "intelligent" bezeichnet, da die ortsabhängige Modulation eine gewünschte Information enthält. Ein Teilelement, dessen Rasterweite unmoduliert ist, wird auch als "dumm" bezeichnet, da es über das regelmäßige Raster hinaus keine weitere Information enthält. Typischerweise ist eines der beiden Teilelemente der Sicherheitsanordnung intelligent und eines dumm ausgebildet, es ist allerdings auch möglich, beide Teilelemente intelligent auszubilden.

Der genannte Bewegungseffekt kann insbesondere bewegte Linien oder Balken zeigen, auch mit mehreren, sich gegenläufig bewegenden Linien- oder Balkenmustern. Die Bewegungen können, müssen aber nicht geradlinig sein, sondern können beispielsweise auch gekrümmt und bei mehreren Linien- oder Balkenmustern ineinander verschlungen verlaufen. Als weitere Bewegungseffekte kommen beispielsweise Pump- und Rotationseffekte in Betracht. Alle Bewegungseffekte sind vorzugsweise farbig, insbesondere mehrfarbig.

Wegen ihrer geringen Dicke eignen sich Sicherheitsanordnungen mit fest miteinander verbundenen Teilelementen oder auch die Teilelemente der Sicherheitsanordnungen besonders gut zur Applikation auf Banknoten und anderen Wertdokumenten. Insbesondere im Verpackungsbereich kann es sich auch anbieten, wenn die Teilelemente nicht fest miteinander verbunden sind, sondern auf unterschiedlichen Verpackungsteilen vorliegen und nur in der Überprüfungsstellung mit einem vertikalen Abstand von weniger als der halben Rasterweite übereinander liegen.

Weitere Ausführungsbeispiele sowie Vorteile der Erfindung werden nachfolgend anhand der Figuren erläutert, bei deren Darstellung auf eine maßstabs- und proportionsgetreue Wiedergabe verzichtet wurde, um die Anschaulichkeit zu erhöhen.

Es zeigen:

Fig. 1   eine schematische Darstellung einer Banknote mit einer optisch variablen Sicherheitsanordnung,

Fig. 2   eine Sicherheitsanordnung im Querschnitt,

Fig. 3   zur Erläuterung der Entstehung des feinen Linienrasters in (a) nur das Reliefraster der Sicherheitsanordnung der Fig. 2, und in (b) das visuelle Erscheinungsbild des Reliefrasters von (a),

Fig. 4, 5   verschiedene Sicherheitsanordnungen im Querschnitt,

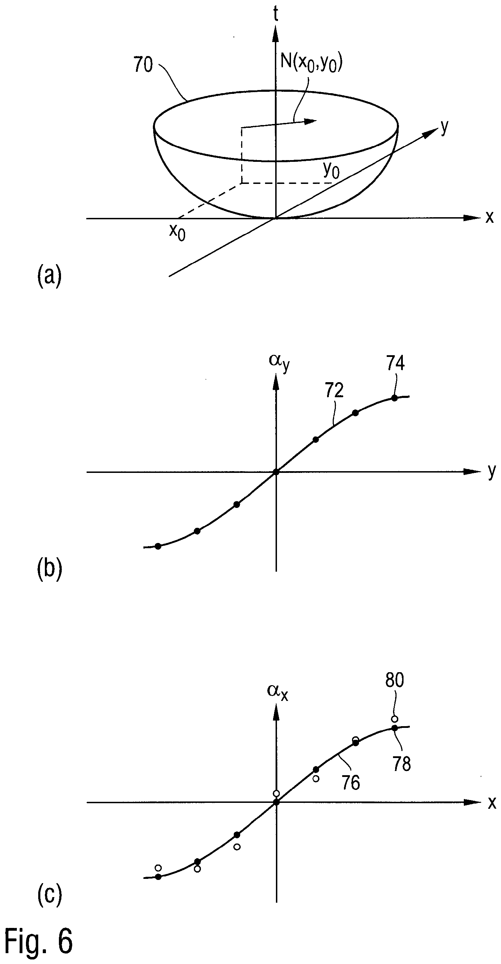

Fig. 6   in (a) eine perspektivische Ansicht einer konkaven Wölbung in Form eines Hohlspiegels, dessen Reflexionsverhalten von einem Rasterelement des ersten Teilelements einer erfindungsgemäßen Sicherheitsanordnung erzeugt wird, in (b) für die y-z-Ebene schematisch den Verlauf des y-Winkels $\alpha_y$ des Normalenvektors N der in (a) gezeigten, vorgegebenen Wölbung als durchgezogene Kurve, sowie den y-Winkel $\alpha_{MS,y}$ des Normalenvektors $N_{MS}$ für die an der entsprechenden Position angeordneten Mikrospiegel als volle Punkte, und in (c) für die x-z-Ebene schematisch den Verlauf des x-Winkels $\alpha_x$ des Normalenvektors N der in (a) gezeigten, vorgegebenen Wölbung als durchgezogene Kurve, den unmodifizierten x-Winkel des Normalenvektors $N_{MS}$ für die an der entsprechenden Position angeordneten Mikrospiegel als volle Punkte, sowie den pseudozufällig moduliert x-Winkel $\alpha_{MS,x}$ der Mikrospiegel als ungefüllte Punkte,

Fig. 7   eine Aufsicht auf eine Sicherheitsanordnung nach einem Ausführungsbeispiel,

Fig. 8    in (a) bis (c) jeweils im Detail die Anordnung der Mikrospiegel innerhalb des in Fig. 7 eingezeichneten Ausschnitts VIII eines Rasterelements,

Fig. 9    in (a) einen Ausschnitt des ersten Teilelements einer Sicherheitsanordnung, in (b) einen stark vergrößerten Ausschnitt des zweiten Teilelements der genannten Sicherheitsanordnung, und in (c) schematisch das Erscheinungsbild der vollständigen Sicherheitsanordnung in der Überprüfungsstellung mit den vertikal übereinander angeordneten ersten und zweiten Teilelementen, und

Fig. 10    eine Aufsicht auf das Reliefraster einer Sicherheitsanordnung nach einem weiteren Ausführungsbeispiel der Erfindung.

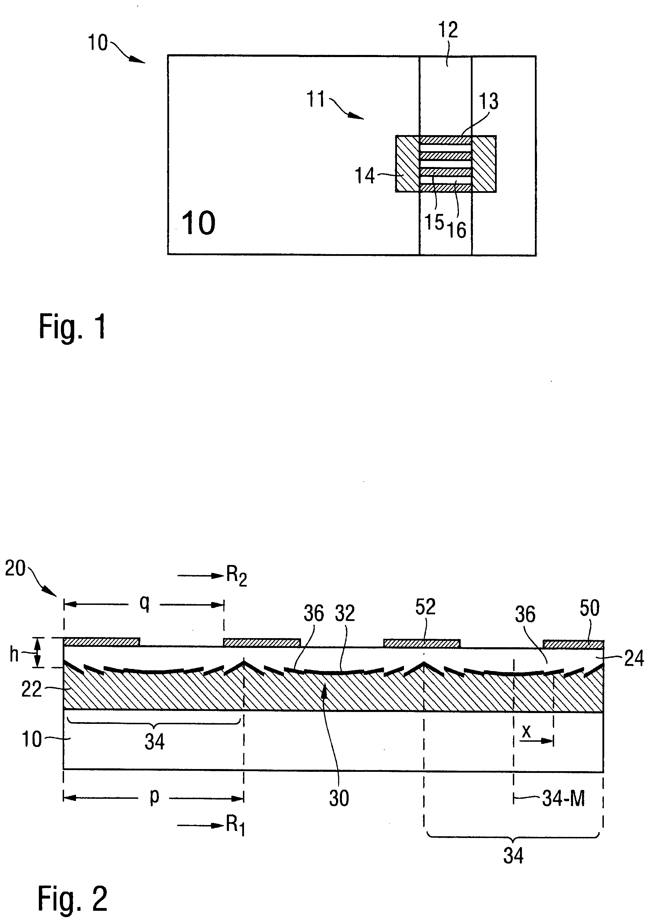

Die Erfindung wird nun am Beispiel von Sicherheitsanordnungen für Banknoten erläutert. Fig. 1 zeigt dazu eine schematische Darstellung einer Banknote 10, die mit einer erfindungsgemäßen optisch variablen Sicherheitsanordnung 11 versehen ist. Die Sicherheitsanordnung 11 umfasst als erstes Teilelement einen auf das Banknotensubstrat applizierten Folienstreifen 12, der in einem Teilbereich 13 mit einem Reliefraster mit einer Vielzahl gerichtet reflektierender Reliefelemente versehen ist.

Der Teilbereich 13 ist zudem mit einem Drucklinienraster 14 überdruckt, welches sich beiderseits des Folienstreifens 12 über den Teilbereich 13 hinaus auf das Banknotenpapier fortsetzt und das zweite Teilelement der Sicherheitsanordnung bildet. Im Ausführungsbeispiel sind das erste Teilelement in Form des Folienstreifens 12 und das zweite Teilelement in Form des aufgedruckten Drucklinienrasters 14 fest miteinander verbunden, so dass die Sicherheitsanordnung ein Sicherheitselement bildet.

Die Gestaltungen und die Rasterweiten des Reliefrasters und des Drucklinienrasters 14 sind in der nachfolgend genauer beschriebenen Weise so aufeinander abgestimmt, dass im Überlappbereich 13 aufgrund eines Moire-Effekts beim Kippen der Banknote 10 ein (beispielsweise farbiger) Bewegungseffekt entsteht. Beispielsweise können im Überlappungsbereich 13 mehrere farbige Balken 15,16 sichtbar sein, die beim Vor- und Zurückkippen der Banknote 10 nach unten oder oben zu laufen scheinen.

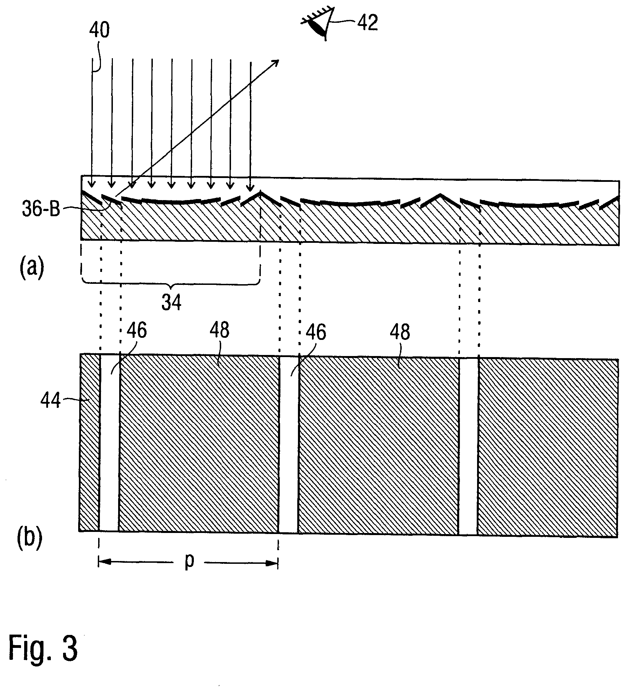

Der grundsätzliche Aufbau erfindungsgemäßer Sicherheitsanordnungen und das Zustandekommen des auffälligen farbigen Bewegungseffekts werden nun mit Bezug auf die Figuren 2 und 3 näher erläutert.

Fig. 2 zeigt eine Sicherheitsanordnung 20 im Querschnitt. Das erste Teilelement der Sicherheitsanordnung 20 ist mittels einer Kleberschicht 22 auf einem Banknotensubstrat 10 angeordnet und enthält eine Prägelackschicht 24, in die ein Reliefraster 30 eingeprägt ist, welches vor dem Aufbringen der Kleberschicht 22 mit einer Metallisierung 32, beispielsweise aus Aluminium oder Silber versehen wurde.

Das Reliefraster 30 selbst besteht aus einer Mehrzahl aneinander anschließender langgestreckter Rasterelemente 34, deren Längsachse sich in der Darstellung der Fig. 2 in die Zeichenebene hinein erstreckt. Jedes Rasterelement 34 besteht aus mehreren parallelen, linienartigen Mikrospiegeln 36, deren Spiegelsteigung sich in der Figur vom linken Rand der Rasterelemente 34 zum rechten Rand fast kontinuierlich von einer ersten, negativen Steigung zu einer zweiten, positiven Steigung ändert. Beispielsweise kann die Steigung eines Mikrospiegels 36 jeweils proportional zum vorzeichenbehafteten Abstand x des Mikrospiegels 36 von der Mittellinie 34-M eines Rasterelements 34 sein, so dass die Mikrospiegel 36 eines Rasterelements 34 das Reflexionsverhalten eines parabolischen Hohlspiegels nachbilden.

Die Abmessung der Rasterelemente 34 in Querrichtung, die gleichzeitig die Rasterweite p des Reliefrasters 30 darstellt, beträgt im Ausführungsbeispiel p = 200 $\mu$m, die Breite der einzelnen Mikrospiegel 36 beträgt dabei rund 22 $\mu$m. Die Abmessung der Rasterelemente 34 und der Mikrospiegel 36 in Längsrichtung, also in die Papierebene der Fig. 2 hinein, beträgt mehrere Millimeter oder sogar Zentimeter, ist also wesentlich größer als die Rasterweite p. Die Breite der Rasterelemente 34 und insbesondere der Mikrospiegel 36 liegt dagegen unterhalb der Auflösungsgrenze des menschlichen Auges, so dass die Rasterelemente 34 und besonders die Mikrospiegel 36 mit bloßem Auge selbst nicht (oder nur in geringem Maße) aufgelöst werden können.

Dennoch entsteht bei der Betrachtung des metallisierten Reliefrasters 30 für einen Betrachter ein feines Linienraster, wie mit Bezug auf Fig. 3 näher erläutert, wobei Fig. 3(a) nur das Reliefraster des ersten Teilelements der Sicherheitsanordnung 20 und Fig. 3(b) das visuelle Erscheinungsbild des Reliefrasters von (a) zeigt. Fällt beispielsweise Licht 40 senkrecht von oben auf das Reliefraster 30 ein, wie in Fig. 3(a) gezeigt, so ist für einen Betrachter 42 die Reflexionsbedingung "Einfallswinkel gleich Ausfallswinkel" nur für einen Mikrospiegel 36-B eines Rasterelements 34 erfüllt.

In der in Fig. 3(b) gezeigten Aufsicht 44 erscheint dieser linienförmige Mikrospiegel 36-B daher als helle, feine Linie 46, während die von den anderen Mikrospiegeln eingenommenen Bereiche 48 das einfallende Licht 40 in andere Raumrichtungen reflektieren und daher für den Betrachter 42 dunkel erscheinen. Da sich die Rasterelemente 34 und damit die Mikrospiegel 36-B gleicher Orientierung im Abstand der Rasterweite p wiederholen, weist das entstehende feine Linienraster 46 ebenfalls eine Rasterweite p auf.

Wird das Reliefraster 30 der Fig. 3 von links nach rechts (d. h. um eine sich parallel zur Längsrichtung der Mikrospiegel und somit in die Papierebene der Fig. 3(a) hinein erstreckende Achse) gekippt, so wandert die Position desjenigen Mikrospiegels 36, für den die Reflexionsbedingung erfüllt ist, nach rechts, so dass auch die Linien 46 des feinen Linienrasters in der Aufsicht 44 für den Betrachter 42 nach rechts wandern. Beim Kippen nach links ergibt sich entsprechend der umgekehrte Bewegungseffekt.

Zurückkommend auf die Darstellung der Fig. 2 enthält die Sicherheitsanordnung 20 zusätzlich zu dem genannten Reliefraster 30 eine Druckschicht in Form eines Rasters 50 paralleler beabstandeter Drucklinien 52 mit einer Rasterweite q in Raumrichtung $R_2$, die auf der dem Reliefraster 30 gegenüberliegenden Oberfläche der Prägelackschicht 24 mit einer lasierenden Druckfarbe aufgedruckt sind. Die Drucklinien 52 sind dabei im Wesentlichen parallel zu den linienförmigen Mikrospiegeln 36 ausgerichtet und die beiden Raster sind so aufeinander abgestimmt, dass die Raumrichtung $R_2$ parallel zur Raumrichtung $R_1$ ist und sich die zweite Rasterweite q von der ersten Rasterweite p nur geringfügig unterscheidet. Im Ausführungsbeispiel ist die zweite Rasterweite q um 10% kleiner als die erste Rasterweite p, beträgt also q = 180 μm.

Durch die leicht unterschiedlichen Rasterweiten der parallelen Raster der Drucklinien 52 und der Mikrospiegel 36 ergibt sich im Zusammenspiel ein Moire-Effekt, bei dem für den Betrachter ein wesentlich gröberes Moire-Linienmuster 15,16 (Fig. 1) sichtbar wird. Bei dem vorliegend gewählten Unterschied der beiden Rasterweiten von 10% ergibt sich ein Moire-Vergrößerungsfaktor von etwa 10, das heißt, das Moire-Linienmuster 15, 16 hat etwa die 10-fache Rasterweite, vorliegend also rund 1,8 mm.

Da die hellen Linien des feinen Linienrasters 46 beim Kippen der Banknote 10 nach unten oder oben laufen, bewegt sich auch das Moire-Linienmuster 15,16 entsprechend. Bewegen sich die feinen Linien 46 um eine ganze Periodenlänge, hier also um p = 200 μm, so bewegen sich die Balken 15 des Moire-Linienmusters ebenfalls um eine Periodenlänge, also um 1,8 mm. Der mikroskopische und mit bloßem Auge kaum sichtbare Bewegungseffekt des Linienrasters 46 wird durch den Moire-Effekt somit zu einer für den Betrachter leicht wahrnehmbaren Bewegung vergrößert.

Um eine geringe Dicke der Sicherheitsanordnung 20 zu erreichen, ist das Raster 50 der Drucklinien 52 mit geringem vertikalen Abstand h über dem Reliefraster 30 angeordnet. Im Ausführungsbeispiel beträgt der vertikale Abstand h beispielsweise nur etwa 10 μm, also nur ein Zwanzigstel der Rasterweite p.

Durch die Verwendung einer lasierenden, beispielsweise roten Farbe für das Drucklinienraster 52 wird zudem erreicht, dass das Moire-Linienmuster 15, 16 abwechselnd aus roten und weißen (hellen) Linien besteht.

Insgesamt entsteht auf die beschriebene Weise eine optisch variable Sicherheitsanordnung mit einem eindimensionalen Reliefraster aus einer Mehrzahl von Rasterelementen, die jeweils aus mehreren linienartigen, in unterschiedliche Richtungen gerichtet reflektierenden Mikrospiegeln gebildet sind. Das Reliefraster ist mit einem über dem Reliefraster angeordneten Drucklinienraster kombiniert, und zeigt beim Kippen einen insbesondere farbigen Bewegungseffekt, der auf einem Moire-Effekt basiert. Wegen seiner geringen Dicke eignet sich die beschriebene Sicherheitsanordnung besonders gut zur Applikation auf Banknoten und anderen Wertdokumenten.

Das beschriebene Reliefraster 30 aus Mikrospiegeln 36 kann besonders vorteilhaft in Form eines Folienelements bereitgestellt werden, bei dem die Mikrospiegel 36 in einen auf einer Trägerfolie aufgebrachten Prägelack 24, beispielsweise einen strahlungshärtenden oder thermoplastischen Lack abgeformt und mit einer reflexionserhöhenden Beschichtung, beispielsweise einer Aluminium-Metallisierung 32 versehen sind. Durch den Einsatz einer Folie mit geprägten Mikrospiegeln wird eine besonders hohe Brillanz der spiegelnden Flächen und damit des optisch variablen, farbigen Bewegungseffekts erreicht.

Das Folienelement kann auf ein Banknotensubstrat aufgebracht werden und die Trägerfolie kann nach der Applikation zur Dickenreduzierung wieder abgezogen werden, so dass auf der Banknote 10 dann im Wesentlichen die Prägelackschicht 24, die Metallisierung 32 und die Kleberschicht 22 vorliegen, wie in Fig. 2 gezeigt. In der Praxis können hier weitere, für die Erfindung allerdings nicht wesentliche Schichten vorgesehen sein, wie etwa eine Schutzlackschicht, Farbannahmeschicht oder Primerschicht.

Über diese Schichtenfolge wird dann in der oben beschriebenen Art das Raster 50 der Drucklinien 52 gedruckt, um das zweite Teilelement der Sicherheitsanordnung 20 zu erhalten.

Das Raster der Drucklinien 50,14 kann sich über den Rand des Reliefrasters 30 bzw. des Folienstreifens 12 hinaus fortsetzen, wie in Fig. 1 gezeigt. Dadurch wird zum einen der Bewegungseffekt visuell besonders gut in das Banknotendesign integriert, zum anderen wird die Fälschungssicherheit erhöht, da ein von einer Banknote abgelöster Folienstreifen 12 passergenau auf eine gefälschte Note aufgeklebt werden müsste, um die Registrierung von Folienstreifen 12 und Drucklinienraster 14 zu bewahren. Visuell entsteht bei einer solchen Gestaltung im Überlappungsbereich 13 ein farbiger Bewegungseffekt, während das Drucklinienraster 14 außerhalb des Überlappungsbereichs 13 wegen des kleinen Linienabstands der Drucklinien (q = 180 μm) im Wesentlichen als homogene Halbtonfläche wirkt.

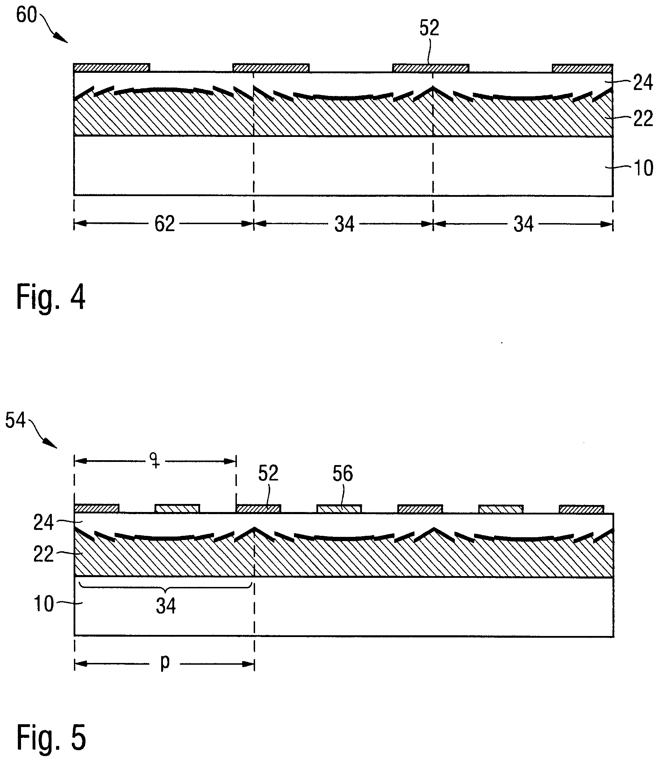

In Fig. 2 sind alle Rasterelemente 34 gleichartig ausgebildet, wobei bei jedem Rasterelement 34 die Steigungen der Mikrospiegel 36 so gewählt sind, dass das Rasterelement 34 das Reflexionsverhalten eines parabolischen Hohlspiegels nachbildet. Es ist auch möglich, in einem Reliefraster 30 zwei oder mehr unterschiedliche Rasterelemente vorliegen zu haben. Beispielsweise zeigt Fig. 4 eine Sicherheitsanordnung 60, die grundsätzlich dem bei Fig. 2 beschriebenen Aufbau folgt, bei der aber nicht nur erste Rasterelemente 34 vorgesehen sind, die das Reflexionsverhalten eines parabolischen Hohlspiegels nachbilden, sondern auch zweite Rasterelemente 62, die das Reflexionsverhalten eines parabolischen Wölbspiegels nachbilden, wie am linken Bildrand der Fig. 4 gezeigt.

Gegenüber den Rasterelementen 34 ist die Steigung der Mikrospiegel 36 bei den zweiten Rasterelementen 62 invertiert, verläuft also vom linken Rand zum rechten Rand von einer ersten, positiven Steigung zu einer zweiten, negativen Steigung. An den Stellen, an denen anstatt erster Rasterelemente 34 zweite Rasterelemente 62 vorgesehen sind, ändert sich im hellen Linienraster zum einen die Position der erzeugten feinen Linien 46, zum anderen zeigen die von den wölbspiegelartigen Rasterelementen 62 erzeugten Linien gegenüber den von den hohlspiegelartigen Rasterelementen 34 erzeugten Linien ein invertiertes Bewegungsverhalten, da die Abfolge der Spiegelsteigungen gerade invertiert ist. Beispielsweise können die von wölbspiegelartigen Rasterelementen 62 erzeugten Linien beim Kippen der Sicherheitsanordnung in eine Richtung nach oben laufen, während die von den hohlspiegelartigen Rasterelementen 34 erzeugten Linien gleichzeitig nach unten laufen. Die Bewegungen können auch gekrümmt und ineinander verschlungen verlaufen, etwa innerhalb von in Form einer Kordel oder einer Doppelhelix vorliegenden Bändern.

Es ist auch möglich, mehr als ein über dem Reliefraster angeordnetes Linienraster vorzusehen. Fig. 5 zeigt dazu eine Sicherheitsanordnung 54, die grundsätzlich dem bei Fig. 2 beschriebenen Aufbau folgt, bei dem aber zwei Drucklinienraster mit parallelen Drucklinien 52, 56 vorgesehen sind. Dabei sind die Drucklinien 56 beispielsweise mit grüner lasierender Farbe zwischen die rot lasierenden Drucklinien 52 gedruckt. Bei dem farbigen Bewegungseffekt der Sicherheitsanordnung 54 zeigt sich dann ein Muster aus wandernden alternierenden roten und grünen Balken. Die Drucklinien 52, 56 können wie in Fig. 5 mit Zwischenraum aufgedruckt sein, können aber auch registergenau aneinander anschließen und die Fläche des Linienrasters vollständig ausfüllen. Ein solcher registergenauer Druck ist gerade bei kleinen Rasterweiten q von etwa 100 μm im Banknotendruck ohne weiteres möglich, für einen potentiellen Fälscher aber sehr schwer nachzustellen.

Neben der Erweiterung eines einzigen Bewegungseffekts um eine weitere Farbe kann ein weiteres Linienraster auch einen zweiten, unterschiedlichen Bewegungseffekt erzeugen. So kann etwa ein erstes, beispielsweise rotes Drucklinienraster eine Rasterweite $q_1$ aufweisen, die geringfügig größer als die erste Rasterweite p ist, während ein zweites, beispielsweise grünes Drucklinienraster eine Rasterweite $q_2$ aufweist, die geringfügig kleiner als die erste Rasterweite p ist. Beim Kippen der Sicherheitsanordnung bewegen sich die durch den Moire-Effekt entstehenden roten und grünen Balken dann in entgegengesetzte Richtungen. Bei einer zweiseitigen Sicherheitsanordnung kann ein weiterer Bewegungseffekt auch auf der gegenüberliegenden Seite des Reliefrasters erzeugt werden und von dieser Seite her sichtbar sein.

Bei einem Aspekt der vorliegenden Erfindung weist das erste Teilelement ein zweidimensionales Reliefraster aus einer Mehrzahl von Rasterelementen 34, 62 auf. Mit Bezug auf Fig. 6(a) erzeugen die Rasterelemente 34, 62 im Wesentlichen das Reflexionsverhalten einer vorgegebenen konkaven und/ oder konvexen Wölbung, wobei im Ausführungsbeispiel eine konkave Wölbung 70 in Form eines Hohlspiegels gezeigt ist. Die Wölbung 70 ist an jeder Position $(x_0,y_0)$ durch einen normalisierten lokalen Normalenvektor $N(x_0,y_0)$ definiert.

Der Normalenvektor $N(x_0,y_0)$ kann beispielsweise durch die Winkel $\alpha_x$ und $\alpha_y$ angegeben werden, die seine Projektion in die x-z-Ebene bzw. die y-z-Ebene mit der x-Achse bzw. y-Achse einschließen. Hat der Normalenvektor $N(x_0,y_0)$ die Komponentendarstellung $N = (n_x, n_y, n_z)$ mit $|N| = 1$, so sind die Winkel $\alpha_x$ und $\alpha_y$ durch $\tan(\alpha_x) = n_x/n_z$ und $\tan(\alpha_y) = n_y/n_z$ gegeben.

Die Rasterelemente des ersten Teilelements enthalten als gerichtet reflektierende Reliefelemente nun eine Mehrzahl von Mikrospiegeln 36, deren Neigung gegen die x-y-Ebene des ersten Teilelements durch die Angabe ihres normalisierten Normalenvektors $N_{MS}(x_0,y_0)$ bestimmt ist. Der Normalenvektor $N_{MS}(x_0,y_0)$ eines Mikrospiegels an einer Position $(x_0,y_0)$ ist dabei im Wesentlichen durch den lokalen Normalenvektor $N(x_0,y_0)$ der vorgegebenen Wölbung 70 an dieser Position bestimmt, ist allerdings durch eine zufällige oder pseudozufällige Winkelmodulation des Normalenvektors in zumindest einer Raumrichtung modifiziert. Der Normalenvektor $N_{MS}(x_0,y_0)$ kann dabei in gleicher Weise wie der Normalenvektor N durch die Winkel $\alpha_{MS,x}$ und $\alpha_{MS,y}$ angegeben werden.

Figuren 6(b) und (c) zeigen anhand eines Beispiels den bevorzugten Fall, dass der Normalenvektor $N_{MS}$ der Mikrospiegel 36 nur in x-Richtung, nicht aber in y-Richtung pseudozufällig modifiziert ist. Die x-Richtung fällt im Ausführungsbeispiel mit der Raumrichtung senkrecht zur Raumrichtung $R_1$ zusammen, in der das Reliefraster die Rasterweite p aufweist.

Zunächst zeigt Fig. 6(b) für die y-z-Ebene mit der Kurve 72 schematisch den Verlauf des Winkels $\alpha_y$ des Normalenvektors N der vorgegebenen Wölbung 70 der Fig. 6(a), und mit den Punkten 74 den Winkel $\alpha_{MS,y}$ des Normalenvektors $N_{MS}$ für die an der entsprechenden Position angeordneten Mikrospiegel 36. In der Figur sind beispielhaft 7 Positionen 74 für Mikrospiegel 36 gezeigt, es versteht sich aber, dass auch eine kleinere oder größere Zahl an Mikrospiegeln 36 vorgesehen sein kann. Wie in Fig. 6(b) dargestellt, ist an jeder Position eines Mikrospiegels der y-Winkel des Normalenvektors $N_{MS}$ gleich dem y-Winkel des Normalenvektors N, also

$$\alpha_{MS,y} = \alpha_y.$$

Figur 6(c) zeigt für die x-z-Ebene mit der Kurve 76 schematisch den Verlauf des Winkels $\alpha_x$ des Normalenvektors N der vorgegebenen Wölbung 70 der Fig. 6(a), und mit den vollen Punkten 78 den Winkel des Normalenvektors $N_{MS}$ für die an der entsprechenden Position angeordneten Mikrospiegel 36, der sich bei unmodifiziertem x-Winkel ergeben würde. Tatsächlich sind aber die x-Winkel der Mikrospiegel pseudozufällig moduliert, indem auf den x-Winkel des $\alpha_x$ des Normalenvektors N eine Winkelmodulation addiert ist, die pseudozufällig zwischen -3° und +3° schwankt:

$$\alpha_{MS,x} = \alpha_x + A_{max} * rand(-1,1),$$

wobei $A_{max}$ = 3° und rand(-1,1) eine Funktion ist, die eine Pseudozufallszahl im Intervall [-1,1] liefert. Die so entstandenen Werte des Winkels $\alpha_{MS,x}$ sind mit ungefüllten Punkten 80 in Fig. 6(c) eingezeichnet. Auch in x-Richtung sind beispielhaft nur 7 Positionen für Mikrospiegel 36 gezeigt, es versteht sich aber, dass auch eine kleinere oder größere Zahl an Mikrospiegeln 36 vorgesehen sein kann.

Für einen allgemeinen Mikrospiegel 36 an Position $(x_0,y_0)$ ergibt sich der Normalenvektor $N_{MS}$ $(x_0,y_0)$ auf dieselbe Weise:

$$\alpha_{MS,x} = \alpha_x + A_{max} * rand(-1,1),$$

$$\alpha_{MS,y} = \alpha_y,$$

wobei $\alpha_x$ und $\alpha_y$ die x- bzw. y-Winkel des Normalenvektors $N(x_0,y_0)$ der vorgegebenen Wölbung 70 an der Position $(x_0,y_0)$ darstellen.

Durch diese Maßnahme wird durch die Mikrospiegel 36 im Wesentlichen das Reflexionsverhalten der vorgegebenen Wölbung 70 erzeugt und zudem in x-Richtung ein durch die Pseudozufallsmodulation erzeugtes Rauschen überlagert. Das Ausmaß des zusätzlichen Rauschens kann durch den Wert $A_{max}$ nach Belieben eingestellt werden.

Grundsätzlich kann auch der y-Winkel $\alpha_{MS,y}$ des Normalenvektor $N_{MS}$ durch eine Zufalls- oder Pseudozufallsfunktion modifiziert sein, wobei die Zufallskomponenten nicht zu groß gewählt werden sollten, um das Reflexionsverhaltens der vorgegebenen Wölbung 70 möglichst weitgehend zu erhalten. Beispielsweise kann für den x-Winkel $A_{max, x}$ = 3° und für den y-Winkel $A_{max, y}$ = 0,3° gewählt werden.

Weiter versteht sich, dass die vorgegebene Wölbung 70 nicht für alle Rasterelemente 34, 62 gleich sein muss. Insbesondere kann die vorgegebene Wölbung 70 bereits eine sich über mehrere Rasterelemente erstreckende ortsabhängige Modulation enthalten, die in Kombination mit einem regelmäßigen Punkt- und/ oder Linienraster ein Muster oder eine Information, insbesondere ein blickwinkelabhängiges farbiges und dynamisches Merkmal erzeugt.

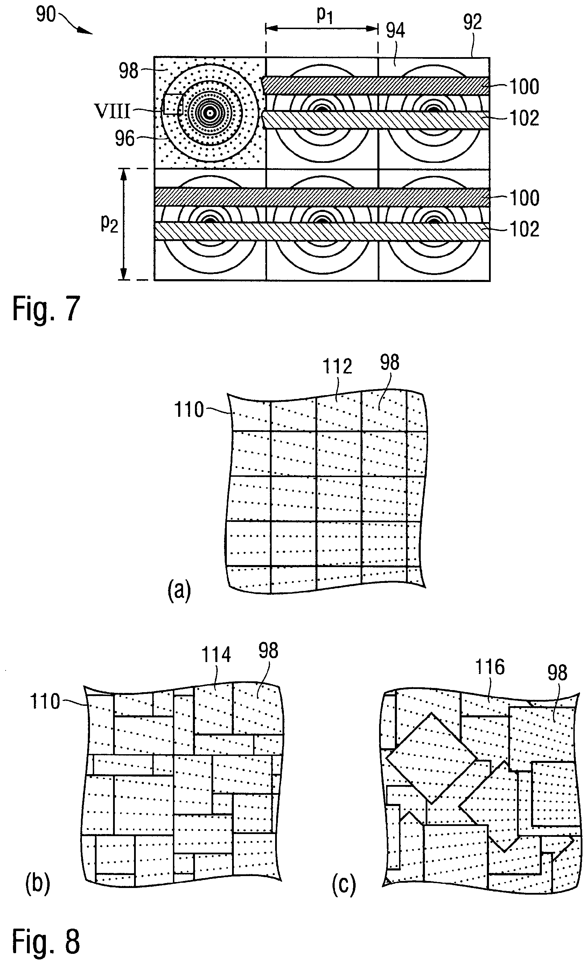

Ein anderer, nicht unter den Anspruchsgegenstand fallender Aspekt ist mit Bezug auf die Figuren 7 und 8 illustriert. Zunächst zeigt Fig. 7 eine Aufsicht auf eine Sicherheitsanordnung 90 mit einem zweidimensionalen Reliefraster 92, das aus einer Mehrzahl von in beiden Raumrichtungen aneinander anschließenden Rasterelementen 94 besteht. Die Rasterweiten $p_1$, $p_2$ in den beiden Raumrichtungen sind im gezeigten Ausführungsbeispiel gleich und betragen beide beispielsweise 200 μm. Jedes Rasterelement 94 ist aus einer Vielzahl von kleinen Mikrospiegeln gebildet, die gegen die x-y-Ebene des Reliefrasters 92 geneigt sind und dabei so ausgerichtet sind, dass sie zusammen das Reflexionsverhalten eines Hohlspiegels (etwa nach Fig. 6(a)) nachbilden. In der Aufsicht der Fig. 7 sind zur Veranschaulichung mit durchgezogenen Linien 96 die kreisförmigen Höhenlinien des nachgebildeten Hohlspiegels eingezeichnet, während die gestrichelten Linien 98 die Richtung der Steigung des nachgebildeten Hohlspiegels und damit auch die lokale Steigung der Mikrospiegel angeben.

Das Reliefraster 92 ist dabei, wie in Fig. 5 illustriert, mit zwei Drucklinienrastern mit Drucklinien 100, 102 unterschiedlicher Farbe kombiniert. Die Drucklinien sind aus zeichnerischen Gründen in der Darstellung der Fig. 7 im linken oberen Rasterelement 94 unterbrochen, um dort die gestrichelten Steigungslinien 98 sichtbar zu machen. Wie weiter oben beschrieben, ergibt sich durch das Zusammenwirken des Reliefrasters 92 und der Raster der Drucklinien 100, 102 ein Moire-Effekt, durch welchen der Betrachter einen farbigen Bewegungseffekt mit zwei unterschiedlich farbigen Balken sieht, die sich beim Kippen der Sicherheitsanordnung 90 vor einem hellen Hintergrund auf und ab bewegen.

Die konkrete Anordnung der Mikrospiegel innerhalb der Rasterelemente 94 ist in Fig. 8 illustriert, die mit Bezugszeichen 110 in (a) bis (c) jeweils den Ausschnitt VIII der Fig. 7 in Aufsicht genauer zeigen. Mit Bezug zunächst auf Fig. 8(a) können die Mikrospiegel 112 regelmäßig in einem Raster angeordnet sein. Die gestrichelten Linien 98 zeigen dabei die Steigung der Mikrospiegel 112 an, die der lokalen Steigung des nachgebildeten Hohlspiegels an der jeweiligen Position entspricht.

Neben einer regelmäßigen Anordnung nach Fig. 8(a) kommt insbesondere eine aperiodische Anordnung der Mikrospiegel in Betracht, durch die eventuelle unerwünschte Beugungseffekte vermieden werden können. Während nämlich die Mikrospiegel bei einer periodischen Anordnung auf den Gitterpunkten eines regelmäßigen Gitterrasters angeordnet sind, gibt es bei einer aperiodischen Anordnung keinen einfachen, regelmäßigen Zusammenhang zwischen den Positionen benachbarter Mikrospiegel. Dadurch werden eine konstruktive Interferenz des an benachbarten Mikrospiegeln reflektierten Lichts und damit das Entstehen eines überlagerten Beugungsmusters zuverlässig verhindert.

Eine Möglichkeit, den Flächenbereich eines Rasterelements 94 aperiodisch mit Mikrospiegeln 114 zu füllen, ist in Fig. 8(b) dargestellt. Dabei ist der Flächenbereich des Rasterelements 94 unregelmäßig in rechteckige Kacheln unterteilt, deren Größe (X,Y) jeweils (a*d, b*d) beträgt, wobei d = 5 μm und a und b unabhängig voneinander jeweils gleich 1, 2 oder 3 ist. Die kleinstmögliche Kachel hat damit einen Größe von 5 μm × 5 μm (a = b = 1), so dass eine achromatische Reflexion sichergestellt ist. Die größtmögliche Kachel weist eine Größe von 15 μm × 15 μm (a = b = 3) auf, so dass die Strukturhöhe der zugehörigen Mikrospiegel 114 bei einem maximalen Neigungswinkel $\alpha_{max}$ auf

$$h_{max} = 15\ \mu m * \sin \alpha_{max}$$

begrenzt ist.

Die Steigung der Mikrospiegel 114 wird entsprechend der lokalen Steigung des nachgebildeten Hohlspiegels am Ort der jeweiligen Mikrospiegels 114 gewählt, wie durch die gestrichelten Linien 98 illustriert.

Figur 8(c) illustriert eine weitere Möglichkeit, den Flächenbereich eines Rasterelements 94 aperiodisch mit Mikrospiegeln 116 zu füllen. Bei dieser Variante variiert nicht nur die Position, sondern auch die Form der Mikrospiegel 116 in unregelmäßiger und damit aperiodischer Weise. Bei der Auswahl der unregelmäßigen Formen wird darauf geachtet, dass keine Teilbereiche mit Abmessungen unterhalb von 2 μm entstehen.

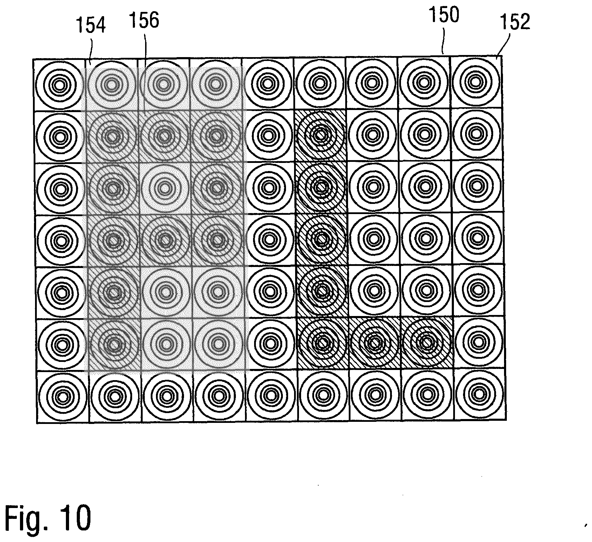

In der konkreten Ausbildung der Rasterelemente können als zusätzliche Echtheitsabsicherung Mikrobilder oder andere Codierungen versteckt werden, wie mit Bezug auf Fig. 10 erläutert. Die Figur zeigt einen Ausschnitt einer Aufsicht auf das zweidimensionale Reliefraster 150 einer erfindungsgemäßen Sicherheitsanordnung. Das zugehörige Drucklinienraster der Sicherheitsanordnung ist der Übersichtlichkeit halber in Fig. 10 nicht dargestellt.

Das zweidimensionale Reliefraster 150 besteht aus einer Vielzahl von in zwei Raumrichtungen aneinander anschließenden Rasterelementen 152 wie grundsätzlich weiter oben bereits erläutert. Als Besonderheit sind bei der Ausgestaltung der Fig. 10 zwei unterschiedliche Arten von Rasterelementen 154,156 vorgesehen, die trotz unterschiedlicher mikroskopischer Ausbildung makroskopisch optisch die gleiche Wirkung haben und daher bei der Betrachtung der Sicherheitsanordnung mit bloßem Auge nicht unterscheidbar sind.

Die ersten und zweiten Rasterelemente 154, 156 unterscheiden sich dabei durch ihre Zusammensetzung aus Reliefelementen und/ oder durch die Anordnung der Reliefelemente, so dass ihre unterschiedliche Ausgestaltung mit Hilfsmitteln, wie etwa einem Mikroskop nachgewiesen und als verstecktes Echtheitsmerkmal genutzt werden kann. Die gemeinsame optische Wirkung der Reliefelemente der Rasterelemente 154, 156 ist allerdings gleich, so dass die Rasterelemente makroskopisch optisch wirkungsgleich sind. Die ersten und zweiten Rasterelemente 154,156 sind in Form eines mit bloßem Auge nicht sichtbaren Motivs in Gestalt eines Musters, von Zeichen oder einer Codierung angeordnet. Figur 10 zeigt beispielhaft eine Anordnung der zweiten Rasterelemente 156 in Form der Buchstaben "PL" vor dem Hintergrund der ersten Rasterelemente 154. Die Anordnung der ersten und zweiten Rasterelemente 154, 156 kann natürlich auch andere Informationen, wie etwa eine Prägewerkzeugkennung oder eine Herstellerkennung enthalten.

Konkret sind die Reliefelemente insbesondere durch kleine, gegen die Ebene des Reliefrasters 150 geneigte Mikrospiegel der bereits beschriebenen Art gebildet, welche zusammen beispielsweise das Reflexionsverhalten eines Hohl- oder Wölbspiegels nachbilden. Die Mikrospiegel der ersten und zweiten Rasterelemente 154, 156 können dabei beispielsweise unterschiedliche Größe haben, etwa 5 μm × 5 μm in den ersten Rasterelementen 154 und 10 μm × 10 μm in den zweiten Rasterelementen 156. Da der Normalenvektor der Mikrospiegels in beiden Rasterelementen unabhängig von der Größe jeweils durch den modulierten lokalen Normalenvektor der vorgegebenen Wölbung bestimmt ist, erzeugen die ersten und zweiten Rasterelemente die gleiche optische Wirkung und sind mit bloßem Auge nicht zu unterscheiden.

Eine weitere Möglichkeit besteht in der Ausbildung der Mikrospiegel mit unterschiedlichen Umrissen, beispielsweise mit quadratischen Umrissen in den ersten Rasterelementen 154 und mit länglichen rechteckigen oder hexagonalen Umrissen in den zweiten Rasterelementen 156. Auch hier sind die Rasterelemente 154,156 optisch wirkungsgleich, da die Normalenvektoren der Mikrospiegels unabhängig von der Umrissform jeweils durch den modulierten lokalen Normalenvektor der vorgegebenen Wölbung bestimmt sind.

Die Unterschiede der beiden Rasterelemente 154,156 können auch in der räumlichen Anordnung der Mikrospiegel liegen, beispielsweise in einer periodischen Anordnung der Mikrospiegel in den ersten Rasterelementen 154 und in einer aperiodischen Anordnung in den zweiten Rasterelementen 156. Die Rasterelemente können auch zwei sich unterscheidende periodische Anordnungen oder zwei sich unterscheidende aperiodische Anordnungen aufweisen. Wieder sind die Rasterelemente 154,156 optisch wirkungsgleich, da die Normalenvektoren der Mikrospiegels unabhängig von der räumlichen Anordnung jeweils durch den modulierten lokalen Normalenvektor der vorgegebenen Wölbung bestimmt sind.

Weiter können sich die ersten und zweiten Rasterelemente durch die Winkelmodulation des Normalenvektors in zumindest einer Raumrichtung unterscheiden. Bei der im Zusammenhang mit Fig. 6 definierten Winkelmodulation können beispielsweise die x-Winkel der Mikrospiegel der ersten Rasterelemente 154 eine Schwankung $A_{max} = 2°$ aufweisen, während die x-Winkel der Mikrospiegel der zweiten Rasterelemente 156 eine Schwankung $A_{max} = 5°$ aufweisen. Derartige Änderungen der Schwankungsbreite sind nur mit anspruchsvollen Methoden nachzuweisen und stellen daher eine hohe Hürde für den potentiellen Fälscher dar. In einer anderen Gestaltung können die Mikrospiegel der ersten Rasterelemente 154 eine Schwankung nur der x-Winkel aufweisen, während die Mikrospiegel der zweiten Rasterelemente 156 eine Schwankung nur der y-Richtung oder keine bzw. eine zu vernachlässigende Schwankung aufweisen.

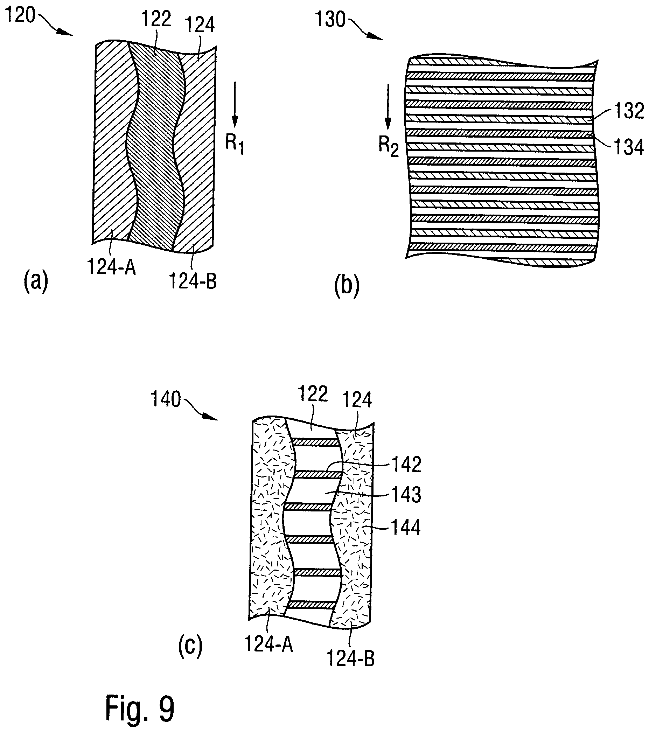

Ein weiterer, nicht unter den Anspruchsgegenstand fallender Aspekt ist in Fig. 9 illustriert. Dabei zeigt Fig. 9(a) einen Ausschnitt des ersten Teilelements 120 einer Sicherheitsanordnung 140, wobei das Teilelement 120 einen auf ein Sicherheitsdokument aufgebrachten Folienstreifen darstellt. Das erste Teilelement 120 enthält in der oben bereits grundsätzlich erläuterten Weise ein zweidimensionales Reliefraster aus einer Mehrzahl von Rasterelementen, das in zumindest einer Raumrichtung $R_1$ mit einer Rasterweite unterhalb von 500 $\mu$m ausbildet ist.

Das erste Teilelement 120 besteht aus einem Motivbereich 122 mit dem gewünschten Bewegungseffekt und einem dazu kontrastierenden Hintergrundbereich 124. Die Rasterelemente sind in den beiden Bereichen in der nachfolgend genauer beschriebenen Weise unterschiedlich ausgebildet, um einen guten visuellen Kontrast zwischen dem Motivbereich 122 und dem Hintergrundbereich 124 zu erzeugen.

Konkret sind im Ausführungsbeispiel in dem Motivbereich 122 die Reliefelemente der Rasterelemente in unterschiedliche Richtungen gerichtet reflektierend ausgebildet und die erste Rasterweite p ist ortsabhängig moduliert, so dass das erste Teilelement 120 "intelligent" ausgebildet ist. In dem Hintergrundbereich 124 des ersten Teilelements sind die Reliefelemente gegenüber den Reliefelementen des Motivbereichs modifiziert, um in der Überprüfungsstellung der Sicherheitsanordnung 140 einen guten visuellen Kontrast zu dem Bewegungseffekt des Motivbereichs zu erzeugen. Genauer sind im gezeigten Ausführungsbeispiel hierzu im Motivbereich 122 reflektierende Mikrospiegel angeordnet, während die Mikrospiegel im Hintergrundbereich 124 mit lichtabsorbierenden Mottenaugenstrukturen beschichtet und damit als Reflexionselemente deaktiviert sind.

Das in Fig. 9(b) in einem stark vergrößerten Ausschnitt gezeigte zweite Teilelement 130 enthält im Ausführungsbeispiel zwei Drucklinienraster mit Drucklinien 132,134 unterschiedlicher Farbe, die in einer Raumrichtung $R_2$ mit Rasterweite q in einem regelmäßigen Rapport angeordnet sind. Die Drucklinien 132,134 sind regelmäßig ohne ortsabhängige Modulation angeordnet, so dass das zweite Teilelement 130 "dumm" ausgebildet ist.

Figur 9(c) zeigt schematisch das Erscheinungsbild der vollständigen Sicherheitsanordnung 140 in der Überprüfungsstellung, in der das erste Teilelement 120 und das zweite Teilelement 130 vertikal so übereinander angeordnet sind, dass die genannte Raumrichtung $R_1$ des ersten Teilelements 120 parallel zu der genannten Raumrichtung $R_2$ des zweiten Teilelements 130 ist und der vertikale Abstand von Reliefraster und Linienraster weniger als die halbe Rasterweite p beträgt.

Beim Kippen der Sicherheitsanordnung 140 entsteht im Motivbereich 122 des Reliefrasters durch das Zusammenwirken des Reliefrasters des ersten Teilelements 120 und des Linienrasters des zweiten Teilelements 130 in der oben beschriebenen Weise ein auffälliger Bewegungseffekt, beispielsweise in Form nach oben bzw. unten laufender farbiger Balken 142, 143. Im Hintergrundbereich 124 reflektieren die dortigen Mikrospiegel dagegen durch die Mottenaugenstrukturen praktisch kein Licht, so dass dort kein Bewegungseffekt entsteht, der Hintergrundbereich 124 vielmehr einen dunklen Hintergrund 144 für den farbigen Bewegungseffekt des Motivbereichs 122 darstellt. Der Kontrast der visuellen Effekte im Motivbereich 122 bzw. Hintergrundbereich 124 lenkt die Aufmerksamkeit des Betrachters zusätzlich auf den farbigen Bewegungseffekt und erhöht damit dessen Wahrnehmbarkeit und Absicherungswirkung.

Der Hintergrundbereich 124 kann gegenüber dem Motivbereich 122 nicht nur abgedunkelt sein, sondern beispielsweise auch aufgehellt sein oder er kann auch mit einem deutlich unterschiedlichen Farbton oder Glanz in Erscheinung treten, wie weiter oben bereits grundsätzlich beschrieben.

Konkret kann der Hintergrundbereich 124 beispielsweise mit langgestreckten dachartigen Prägungen der Rasterweite q in Richtung $R_2$ ausgebildet sein, die zu den Drucklinien 132,134 derart gepasst sind, dass die Drucklinien 132 im Teilbereich 124-A auf den ansteigenden Dach-Prägeflächen und im Teilbereich 124-B auf den abfallenden Dach-Prägeflächen zu liegen kommen, und dass entsprechend die Drucklinien 134 im Teilbereich 124-A auf den abfallenden Prägeflächen und im Teilbereich 124-B auf den ansteigenden Prägeflächen zu liegen kommen. Auf diese Weise erscheint der Hintergrundbereich 124 bei schräger Betrachtung der Sicherheitsanordnung 140 von unten im Teilbereich 124-A in der Farbe der Drucklinien 132 und im Teilbereich 124-B in der Farbe der Drucklinien 134, während sich der Farbeindruck bei Betrachtung von schräg oben, also beispielsweise beim Kippen der Sicherheitsanordnung, umkehrt. Gleichzeitig zeigt der Motivbereich 122 dazu kontrastierend den bereits beschriebenen farbigen Bewegungseffekt mit laufenden farbigen Balken 142, 143.

Eine solche genaue Passerung von dachartigen Prägungen mit den Drucklinien 132, 134 ist technisch sehr anspruchsvoll und für einen Fälscher kaum nachzustellen. Alternativ können die dachartigen Prägungen und die Drucklinien auch ungepassert sein, so dass sich durch das Zusammenwirken der Prägung und der Drucklinien Moire-Effekte ergeben, die ebenfalls einen visuellen Kontrast zu dem Bewegungseffekt des Motivbereichs darstellen. Bei dieser einfacheren Herstellungsvariante hängt die genaue Ausprägung der Moire-Effekte von der genauen relativen Lage der beteiligten Raster auf den jeweiligen Nutzen ab und wird sich daher beispielsweise bei der Herstellung von Banknoten von Nutzen zu Nutzen etwas unterscheiden.

Bezugszeichenliste

| 10 | Banknote |
|---|---|
| 11 | Sicherheitsanordnung |
| 12 | Folienstreifen |
| 13 | Teilbereich |
| 14 | Drucklinienraster |
| 15,16 | farbige Balken |
| 20 | Sicherheitsanordnung |
| 22 | Kleberschicht |
| 24 | Prägelackschicht |
| 30 | Reliefraster |
| 32 | Metallisierung |
| 34 | Rasterelemente |
| 34-M | Mittellinie eines Rasterelements |
| 36, 36-B | Mikrospiegel |
| 40 | Licht |
| 42 | Betrachter |
| 44 | Aufsicht |
| 46 | feine Linien |
| 48 | andere Bereiche |
| 50 | Raster |
| 52 | Drucklinien |
| 54 | Sicherheitsanordnung |
| 56 | Drucklinien |
| 60 | Sicherheitsanordnung |
| 62 | zweite Rasterelemente |
| 70 | Wölbung |
| 72 | Kurve |
| 74 | Punkten |
| 76 | Kurve |
| 78 | volle Punkte |
| 80 | ungefüllte Punkte |
| 90 | Sicherheitsanordnung |
| 92 | Reliefraster |
| 94 | Rasterelement |
| 96 | Höhenlinien |
| 98 | Richtung der Steigung |
| 100,102 | Drucklinien |
| 110 | Ausschnitt VIII der Fig. 7 |
| 112,114,116 | Mikrospiegel |
| 120 | erstes Teilelement |
| 122 | Motivbereich |
| 124 | Hintergrundbereich |
| 124-A, 124-B | Teilbereiche des Hintergrundbereichs |
| 130 | zweites Teilelement |
| 132,134 | Drucklinien |
| 140 | Sicherheitsanordnung |
| 142,143 | laufende Balken |
| 144 | dunkler Hintergrund |
| 150 | Reliefraster |
| 152 | Rasterelemente |

154,156     erste bzw. zweite Rasterelementen

**Patentansprüche**

1. Optisch variable Sicherheitsanordnung (20) zur Absicherung von Wertgegenständen, mit

- einem ersten Teilelement mit einem zweidimensionalen Reliefraster (30) aus einer Mehrzahl von Rasterelementen (34), welches in zumindest einer Raumrichtung $R_1$ eine erste Rasterweite p unterhalb von 500 $\mu$m aufweist, und bei dem die Rasterelemente (34) jeweils aus zumindest zwei, in unterschiedliche Richtungen gerichtet reflektierenden Reliefelementen gebildet sind, und

- einem zweiten Teilelement mit zumindest einem Punkt- und/oder Linienraster (50), das in einer Raumrichtung $R_2$ eine zweite Rasterweite q aufweist,

- wobei das erste und zweite Teilelement in einer Überprüfungsstellung vertikal so übereinander angeordnet sind, dass die genannte Raumrichtung $R_1$ des ersten Teilelements parallel zu der genannten Raumrichtung $R_2$ des zweiten Teilelements ist und der vertikale Abstand von Reliefraster (30) und Punkt- und/oder Linienraster (50) weniger als die halbe Rasterweite p beträgt,

- wobei sich die zweite Rasterweite q von der ersten Rasterweite p nur geringfügig, insbesondere um weniger als ein Fünftel unterscheidet, und/oder die erste Rasterweite p und/ oder die zweite Rasterweite q ortsabhängig moduliert sind, so dass in der genannten Überprüfungsstellung durch das Zusammenwirken des Reliefrasters (30) und des Punkt- und/ oder Linienrasters (50) beim Kippen der Sicherheitsanordnung ein Bewegungseffekt entsteht,

- wobei die Rasterelemente (34) des ersten Teilelements jeweils im Wesentlichen das Reflexionsverhalten einer vorgegebenen konkaven und/oder konvexen Wölbung erzeugen, welche an jeder Position durch einen normalisierten lokalen Normalenvektor definiert ist, und

- wobei die Rasterelemente (34) des ersten Teilelements als gerichtet reflektierende Reliefelemente eine Mehrzahl von Mikrospiegeln (36, 36-B) enthalten, deren Neigung gegen die x-y-Ebene des ersten Teilelements durch die Angabe ihres normalisierten Normalenvektors bestimmt ist, und wobei der Normalenvektor eines Mikrospiegels (36, 36-B) an einer Position $(x_0, y_0)$ durch den lokalen Normalenvektor der vorgegebenen Wölbung an dieser Position bestimmt ist, allerdings modifiziert durch eine zufällige oder pseudozufällige Winkelmodulation des Normalenvektors in zumindest einer Raumrichtung.

**2.** Sicherheitsanordnung nach Anspruch 1, **dadurch gekennzeichnet, dass** nur in einer Raumrichtung eine Modifikation durch eine zufällige oder pseudozufällige Winkelmodulation des Normalenvektors vorliegt, wobei die Winkelmodulation vorzugsweise einen Maximalwert von weniger als 5°, oder von weniger als 3° aufweist.

**3.** Sicherheitsanordnung nach Anspruch 1, **dadurch gekennzeichnet, dass** eine Modifikation durch eine zufällige oder pseudozufällige Winkelmodulation des Normalenvektors in zwei zueinander senkrechten Raumrichtungen vorliegt, wobei vorzugsweise die maximale Winkelmodulation in den beiden Raumrichtungen unterschiedlich groß ist und die größere maximale Winkelmodulation bevorzugt mindestens 2-mal, besonders bevorzugt mindestens 5-mal, und insbesondere mindestens 10-mal größer ist als die kleinere maximale Winkelmodulation.

**4.** Sicherheitsanordnung nach wenigstens einem der Ansprüche 1 bis 3, **dadurch gekennzeichnet, dass** die Rasterelemente des ersten Teilelements im Wesentlichen das Reflexionsverhalten eines Hohl- oder Wölbspiegels, insbesondere das Reflexionsverhalten eines parabolischen Hohl- oder parabolischen Wölbspiegels erzeugen.

**5.** Sicherheitsanordnung nach wenigstens einem der Ansprüche 1 bis 4, **dadurch gekennzeichnet, dass** die vorgegebene Wölbung eine sich über mehrere Rasterelemente erstreckende ortsabhängige Modulation enthält, die in Kombination mit dem Punkt- und/ oder Linienraster ein Muster oder eine Information, insbesondere ein blickwinkelabhängiges farbiges und dynamisches Merkmal erzeugt.

**6.** Sicherheitsanordnung nach wenigstens einem der Ansprüche 1 bis 5, **dadurch gekennzeichnet, dass** das erste Teilelement und das zweite Teilelement in der Überprüfungsstellung fest miteinander verbunden sind.

**7.** Sicherheitsanordnung nach Anspruch 6, **dadurch gekennzeichnet, dass** das erste Teilelement in Form eines Folienelements ausgebildet ist, das auf ein Sicherheitsdokument aufgebracht oder eingebracht ist, und das zweite Teilelement durch ein Druckelement gebildet ist.

**8.** Sicherheitsanordnung nach wenigstens einem der Ansprüche 1 bis 7, **dadurch gekennzeichnet, dass** das zweidimensionale Reliefraster in einem Teilbereich optisch gleichwirkende erste und zweite Rasterelemente enthält, deren Zusammensetzung aus Reliefelementen sich unterscheidet und/oder in denen sich die Anordnung der Reliefelemente unterscheidet, wobei die ersten und zweiten Rasterelemente in Gestalt eines mit bloßem Auge nicht sichtbaren Motivs in Form eines Musters, von Zeichen oder einer Codierung angeordnet sind.

**9.** Sicherheitsanordnung nach Anspruch 8, **dadurch gekennzeichnet, dass** sich die ersten und zweiten Rasterelemente in der räumlichen Anordnung der Reliefelemente innerhalb der Rasterelemente unterscheiden, insbesondere, dass die Reliefelemente der ersten Rasterelemente periodisch und die Reliefelemente der zweiten Rasterelemente aperiodisch angeordnet sind oder umgekehrt.

**10.** Sicherheitsanordnung nach Anspruch 8 oder 9, **dadurch gekennzeichnet, dass** sich die ersten und zweiten Rasterelemente in der Umrissform und/ oder Größe der enthaltenen Reliefelemente unterscheiden.

**11.** Sicherheitsanordnung nach einem der Ansprüche 8 bis 10, **dadurch gekennzeichnet, dass** sich die ersten und zweiten Rasterelemente durch die Winkelmodulation des Normalenvektors in zumindest einer Raumrichtung unterscheiden.

**12.** Datenträger mit einer Sicherheitsanordnung nach wenigstens einem der Ansprüche 1 bis 11, wobei bevorzugt zumindest ein Linienraster der Sicherheitsanordnung in Teilbereichen das Reliefraster überdeckt und sich in Teilbereichen außerhalb des Reliefrasters auf den mit der Sicherheitsanordnung versehenen Datenträger erstreckt.

**Claims**

**1.** An optically variable security arrangement (20) for securing valuable articles, having

- a first sub-element having a two-dimensional relief grid (30) that is composed of a plurality of grid elements (34) and that has, in at least one spatial direction $R_1$, a first line screen p below 500 $\mu$m, and in which the grid elements (34) are each formed from at least two relief elements that are directionally reflective in different directions, and
- a second sub-element having at least one dot and/or line grid (50) that, in a spatial direction $R_2$, has a second line screen q,
- the first and second sub-element, in a verification position, being stacked vertically in such a way that said spatial direction $R_1$ of the first sub-element is parallel to said spatial direction $R_2$ of the second sub-element and the vertical spacing between the relief grid (30) and the dot and/or line grid (50) is less than half of the line screen p,

- the second line screen q differing only slightly from the first line screen p, especially by less than one-fifth, and/or the first line screen p and/or the second line screen q being location-dependently modulated such that, in said verification position, a movement effect is created by the interplay of the relief grid (30) and the dot and/or line grid (50) when the security arrangement is tilted,
- the grid elements (34) of the first sub-element each producing substantially the reflection behavior of a given concave and/or convex curvature that is defined at each position by a normalized local normal vector, and
- the grid elements (34) of the first sub-element including, as directionally reflective relief elements, a plurality of micromirrors (36, 36-B) whose inclination against the x-y plane of the first sub-element is determined by indicating its normalized normal vector, and the normal vector of a micromirror (36, 36-B) at a position $(x_0, y_0)$ being determined by the local normal vector of the given curvature at said position, modified, however, by a random or pseudorandom angle modulation of the normal vector in at least one spatial direction.

2. The security arrangement according to claim 1, **characterized in that** only in one spatial direction is there a modification by a random or pseudorandom angle modulation of the normal vector, the angle modulation preferably having a maximum value of less than 5°, or of less than 3°.

3. The security arrangement according to claim 1, **characterized in that** there is a modification by a random or pseudorandom angle modulation of the normal vector in two spatial directions that are perpendicular to each other, the maximum angle modulation preferably being of different sizes in the two spatial directions and the larger maximum angle modulation preferably being at least 2 times, particularly preferably at least 5 times and especially at least 10 times larger than the smaller maximum angle modulation.

4. The security arrangement according to at least one of claims 1 to 3, **characterized in that** the grid elements of the first sub-element produce substantially the reflection behavior of a concave or convex mirror, especially the reflection behavior of a parabolic concave or parabolic convex mirror.

5. The security arrangement according to at least one of claims 1 to 4, **characterized in that** the given curvature includes a location-dependent modulation that extends across multiple grid elements and that, in combination with the dot and/or line grid, produces a pattern or a piece of information, especially a viewing-angle-dependent colored and dynamic feature.

6. The security arrangement according to at least one of claims 1 to 5, **characterized in that** the first sub-element and the second sub-element are firmly joined together in the verification position.

7. The security arrangement according to claim 6, **characterized in that** the first sub-element is developed in the form of a foil element that is applied to or introduced into a security document, and the second sub-element is formed by a printing element.

8. The security arrangement according to at least one of claims 1 to 7, **characterized in that,** in a sub-region, the two-dimensional relief grid includes first and second optically equivalent grid elements whose composition composed of relief elements differs and/or in which the arrangement of the relief elements differs, the first and second grid elements being arranged in the form of a motif, not visible with the naked eye, in the form of a pattern, characters or a code.

9. The security arrangement according to claim 8, **characterized in that** the first and second grid elements differ in the spatial arrangement of the relief elements within the grid elements, especially **in that** the relief elements of the first grid elements are arranged periodically and the relief elements of the second grid elements aperiodically, or vice versa.

10. The security arrangement according to claim 8 or 9, **characterized in that** the first and second grid elements differ in the contour shape and/or size of the relief elements included.

11. The security arrangement according to one of claims 8 to 10, **characterized in that** the first and second grid elements differ by the angle modulation of the normal vector in at least one spatial direction.

12. A data carrier having a security arrangement according to at least one of claims 1 to 11, at least one line grid of the security arrangement preferably covering the relief grid in sub-regions and, in sub-regions outside of the relief grid, extending to the data carrier provided with the security arrangement.

**Revendications**

1. Dispositif de sécurité (20) optiquement variable, destiné à sécuriser des objets de valeur, pourvu

   - d'un premier élément partiel doté d'une trame en relief (30) bidimensionnelle, constituée d'une multiplicité d'éléments de trame (34), laquelle, dans au moins une direction spatiale $R_1$ présente une première largeur de trame p inférieure à 500 μm, et sur laquelle les éléments de trame (34) sont constitués chacun d'au moins deux éléments en relief réfléchissants en étant orientés dans différentes directions, et

- d'un deuxième élément partiel, doté d'au moins une trame ponctuelle et / ou linéaire (50), qui dans une direction spatiale $R_2$ présente une deuxième largeur de trame q,

- dans une position de vérification, le premier et le deuxième éléments partiels étant superposés à la verticale, de telle sorte que la direction spatiale $R_1$ citée du premier élément partiel soit parallèle à la direction spatiale $R_2$ citée du deuxième élément partiel et que l'écart vertical entre la trame en relief (30) et la trame ponctuelle et / ou linéaire (50) s'élève à moins de la demi largeur de trame p,

- la deuxième largeur de trame q ne se différenciant que légèrement, notamment de moins d'un cinquième de la première largeur de trame p, et / ou la première largeur de trame p et / ou la deuxième largeur de trame q étant modulées en fonction de la localisation, de telle sorte que dans la position de vérification citée, par l'interaction de la trame en relief (30) et de la trame ponctuelle et / ou linéaire (50), un effet de déplacement ait lieu lors du basculement du dispositif de sécurisation,

- les éléments de trame (34) du premier élément partiel générant chacun sensiblement la réflectivité d'une courbure prédéfinie concave et / ou convexe, qui à chaque position est définie par un vecteur normal local normalisé, et

- les éléments de trame (34) du premier élément partiel contenant en tant qu'éléments en relief réfléchissants dans une orientation une multiplicité de micro-miroirs (36, 36-B), dont l'inclinaison à l'encontre du plan x-y du premier élément partiel est déterminée par l'indication de leur vecteur normal normalisé, et le vecteur normal d'un micro-miroir (36, 36-B) sur une position $(x_0, y_0)$ étant déterminé par un vecteur normal local de la courbure prédéfinie à ladite position, modifié toutefois par une modulation angulaire aléatoire ou pseudo-aléatoire du vecteur normal dans au moins une direction spatiale.

2. Dispositif de sécurité selon la revendication 1, **caractérisé en ce que** qu'une modification par une modulation angulaire aléatoire ou pseudo-aléatoire du vecteur normal n'est présente que dans une seule direction spatiale, la modulation angulaire présentant de préférence une valeur maximale de moins de 5 °, ou de moins de 3 °.

3. Dispositif de sécurité selon la revendication 1, **caractérisé en ce qu'**une modification par une modulation angulaire aléatoire ou pseudo-aléatoire du vecteur normal est présente dans deux directions spatiales perpendiculaires l'une à l'autre, de préférence la modulation angulaire maximale étant de valeur différente dans les deux directions spatiales et la modulation angulaire maximale la plus élevée étant supérieure de préférence d'au moins 2 fois, de manière particulièrement préférentielle d'au moins 5 fois, et notamment d'au moins 10 fois à la plus petite modulation angulaire maximale.

4. Dispositif de sécurité selon au moins l'une quelconque des revendications 1 à 3, **caractérisé en ce que** les éléments de trame du premier élément partiel génèrent sensiblement la réflectivité d'un miroir concave ou d'un miroir convexe, notamment la réflectivité d'un miroir concave parabolique ou d'un miroir convexe parabolique.

5. Dispositif de sécurité selon au moins l'une quelconque des revendications 1 à 4, **caractérisé en ce que** la courbure prédéfinie contient une modulation en fonction de la localisation qui s'étend par-dessus plusieurs éléments de trame, qui en association avec la trame ponctuelle et / ou linéaire, génère un motif ou une information, notamment une caractéristique colorée et dynamique dépendant de l'angle de vision.

6. Dispositif de sécurité selon au moins l'une quelconque des revendications 1 à 5, **caractérisé en ce que** dans la position de vérification, le premier élément partiel et le deuxième élément partiel sont solidement reliés l'un à l'autre.

7. Dispositif de sécurité selon la revendication 6, **caractérisé en ce que** le premier élément partiel est conçu sous la forme d'un élément pelliculaire qui est appliqué sur un document de sécurité ou introduit dans celui-ci et **en ce que** le deuxième élément partiel est constitué par un élément d'impression.

8. Dispositif de sécurité selon au moins l'une quelconque des revendications 1 à 7, **caractérisé en ce que** la trame en relief bidimensionnelle contient dans une zone partielle des premiers et des deuxièmes éléments de trame à effet optique identique, dont la composition en éléments en relief se différencie et / ou dans lesquels la disposition des éléments en relief se différencie, les premiers et les deuxièmes éléments de trame étant disposés selon la configuration d'un motif non visible à l'oeil nu sous la forme d'un dessin, de caractères ou d'un codage.

9. Dispositif de sécurité selon la revendication 8, **caractérisé en ce que** les premiers et les deuxièmes éléments de trame se différencient par la disposition dans l'espace des éléments en relief à l'intérieur des éléments de trame, notamment **en ce que** les éléments en relief des premiers éléments de trame sont disposés de manière périodique et les éléments en relief des deuxièmes éléments de trame sont disposés de manière apériodique ou inversement.

10. Dispositif de sécurité selon la revendication 8 ou 9, **caractérisé en ce que** les premiers et les deuxièmes éléments de trame se différencient par la forme de contour et / ou par la taille des éléments en relief contenus.

11. Dispositif de sécurité selon l'une quelconque des revendications 8 à 10, **caractérisé en ce que** les premiers et les deuxièmes éléments de trame se différencient par la modulation angulaire du vecteur normal dans au moins une direction spatiale.

12. Support de données, doté d'un dispositif de sécurité selon au moins l'une quelconque des revendications 1 à 11, de préférence au moins une trame linéaire du dispositif de sécurité recouvrant dans des zones partielles la trame en relief et s'étendant dans des zones partielles extérieures à la trame en relief sur le support de données équipé du dispositif de sécurité.

10

11

12

13

14

15 16

10

## Fig. 1

20

R₂

q

36 32

52

36

50

h

24

22

34

x

10

p

30

34-M

R₁

34

## Fig. 2

**Fig. 3**

Fig. 4

Fig. 5

(a)

(b)

(c)

Fig. 6

Fig. 7

(a)

(b)                    (c)

Fig. 8

Fig. 9

Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2009000530 A2
- WO 2011066990 A2
- WO 2011066991 A2
- WO 2017011476 A1
- WO 2012055505 A1